# EUROPÄISCHE PATENTSCHRIFT

(11) **EP 3 803 677 B1**
(45) Veröffentlichungstag und Bekanntmachung des Hinweises auf die Patenterteilung: **03.08.2022**
(21) Anmeldenummer: 19805533.7
(22) Anmeldetag: 06.06.2019
(51) Int. Cl.: G06K 1/12

(54) **KARTENMARKIERSYSTEM UND VERFAHREN ZUM AUTOMATISIERTEN ERMITTELN EINER OPTIMIERTEN EINSTELLUNG EINES KARTENMARKIERSYSTEMS**
CARD-MARKING SYSTEM AND METHOD FOR THE AUTOMATED DETECTION OF AN OPTIMIZED SETTING OF A CARD-MARKING SYSTEM
SYSTÈME DE MARQUAGE DE CARTES ET PROCÉDÉ DE DÉTERMINATION AUTOMATIQUE D'AJUSTEMENT OPTIMISÉ D'UN SYSTÈME DE MARQUAGE DE CARTES

(30) Priorität: 11.06.2018 DE 102018113913
(43) Veröffentlichungstag der Anmeldung: 14.04.2021
(73) Patentinhaber: Mühlbauer GmbH & Co. KG, 93426 Roding (DE)
(72) Erfinder: IRLBACHER, Benedikt, 92431 Neunburg (DE); NGUYEN, Tu, 81829 München (DE); STARK, Robert, 08258 Markneukirchen (DE)
(74) Vertreter: Platzöder, Michael Christian
(86) Internationale Anmeldenummer: PCT/EP2019/064905
(87) Internationale Veröffentlichungsnummer: WO 2019/238546

(56) Entgegenhaltungen:
- DE-A1-102008 025 776
- DE-A1-102009 023 288
- US-A1- 2010 292 947

## Beschreibung

Die vorliegende Erfindung betrifft ein Kartenmarkiersystem, insbesondere ein Kartenmarkiersystem zur Personalisierung von Kunststoffkarten - wie beispielsweise Chipkarten oder Ausweiskarten - mittels Lasermarkierung, sowie ein Verfahren zum automatisierten Ermitteln einer optimierten Einstellung eines solchen Kartenmarkiersystems.

Aus dem Stand der Technik ist eine Vielzahl verschiedener Typen von personalisierten Karten bekannt. So gehören im Sinne der Erfindung beispielsweise Ausweiskarten, insbesondere auch Datenseiten für Ausweise wie etwa Reisepässe, und viele Arten von Chipkarten, etwa Bankkarten, Kreditkarten, Ausweiskarten, Mitgliedskarten, Zugangsberechtigungskarten usw. zur Gruppe der personalisierten Karten. Dabei bedeutet "Personalisierung" bzw. "personalisiert", dass die entsprechenden Karten eine Information enthalten oder tragen, die typischerweise einem Inhaber der Karte zugeordnet ist. So kann die Information etwa in einigen Fällen den Inhaber identifizieren, beispielsweise mittels seines Namens, einer Identitätsnummer oder anderer Merkmale, die auf die Karte etwa aufgedruckt, anderweitig aufgebracht oder in ihr gespeichert sind. Die Personalisierung kann dabei insbesondere individuell auf eine einzelne Person bezogen sein, oder aber auch auf eine bestimmte begrenzte Gruppe von Personen, beispielsweise Mitarbeiter eines Unternehmens. In vielen Fällen sind die personalisierten Karten Kunststoffkarten, d.h. sie enthalten einen überwiegenden Kunststoffanteil, oft bestehen sie auch im Wesentlichen daraus. Weit verbreitet sind etwa Karten aus einem kunststoffhaltigen Laminat, auf dem Personalisierungsinformationen aufgebracht oder darin eingebracht sind. Auch personalisierte Karten aus Papier bzw. Pappe oder papierhaltigen Mischwerkstoffen sind bekannt. Das Aufbringen der Personalisierungsinformationen kann dabei beispielsweise mittels Drucken oder mittels Gravur oder gezielter lokaler Verfärbung des Oberflächenmaterials durch Energieeinwirkung, insbesondere mittels eines geeigneten Lasers erfolgen.

Bekannte Kartenmarkiersysteme zur Personalisierung von Karten weisen oftmals ein Markiersubsystem zum Erzeugen einer Markierung auf einer zu markierenden Karte sowie ein zugeordnetes Visionssubsystem zur visuellen Inspektion der Karte vor, während oder nach dem Markieren auf. Das Visionssystem weist in der Regel zu diesem Zweck eine Kamera auf. Die Inspektion kann dabei insbesondere zur Qualitätskontrolle für den Markierungsprozess dienen sowie zum manuellen Justieren einzelner Komponenten des Karten Markierungssystems, insbesondere zur relativen Justierung des Visionssubsystem und des Markiersubsystems zueinander.

Entsprechender Stand der Technik ist beispielsweise in DE102008025776 A1 und US2010/929947 A1 offenbart.

Bei bekannten Systemen muss die komplette Einstellung und relative Ausrichtung des Visionssubsystems und des Markiersubsystems, etwa bei der erstmaligen Verwendung oder nach einer Wartung oder einem Ersatzteilaustausch, vollkommen manuell erfolgen, was sehr zeitaufwendig und fehleranfällig ist. Meistens wird dabei zudem eine Vielzahl von Karten verbraucht, die für iterative Probepersonalisierungen verwendet werden müssen, anhand von deren Ergebnissen Rückschlüsse auf eine manuell zu tätigende Veränderung der Einstellung für eine nächste Iteration gezogen werden, bis nach meist etlichen Iterationen eine ausreichend genaue Einstellung erreicht wird.

Der Erfindung liegt die Aufgabe zugrunde, das Einstellen eines solchen Kartenmarkiersystems zu verbessern, insbesondere im Hinblick auf eine Reduktion der dazu erforderlichen Benutzeranforderungen, des erforderlichen Zeitaufwands, des dazu erforderlichen Karteneinsatzes und/oder der Vermeidung von Einstellungsfehlern.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft ein Verfahren zum automatisierten Ermitteln einer optimierten Einstellung eines Kartenmarkiersystems, insbesondere eines Kartenmarkiersystems zur Personalisierung von Kunststoffkarten mittels Lasermarkierung, wobei das Kartenmarkiersystem ein Markiersubsystem zum Markieren einer Karte sowie ein Visionssubsystem zum Inspizieren der Karte aufweist. Das Verfahren umfasst:
(a) einen Visionssubsystemeinstellungsprozess zum automatisierten Ermitteln einer optimierten Soll-Einstellung des Visionssubsystems, aufweisend: (a1) Inspizieren eines Referenzelements, insbesondere einer Referenzkarte mit Referenzmarkierung, mittels des Visionssubsystems unter Generierung eines Inspektionsergebnisses, wobei das Visionssubsystems eine gegenwärtig eingestellte Ist-Einstellung, die insbesondere eine definierte Default-Einstellung sein kann, aufweist; und (a2) Ermitteln einer Soll-Einstellung des Visionssubsystems in Abhängigkeit von einem Vergleich des Inspektionsergebnisses mit einem Referenzinspektionskriterium so, dass sie eine im Hinblick auf das Referenzinspektionskriterium relativ zur Ist-Einstellung optimierte Soll-Einstellung des Visionssubsystems für einen nachfolgenden operativen Markierbetrieb des Kartenmarkiersystems definiert; und
(b) einen nachfolgenden Markiersubsystemeinstellungsprozess zum automatisierten Ermitteln einer optimierten Soll-Einstellung des Markiersubsystems, aufweisend: (b1) Markieren einer Karte mittels des Markiersubsystems unter Ausbildung einer vorbestimmten Referenzmarkierung, wobei das Markiersubsystem eine gegenwärtig eingestellte Ist-Einstellung aufweist; (b2) Inspizieren der markierten Karte mittels des gemäß seiner im Visionssubsystemeinstellungsprozess ermittelten Soll-Einstellung eingestellten Visionssubsystems unter Generierung eines Karteninspektionsergebnisses; und (b3) Ermitteln einer Soll-Einstellung des Markiersubsystems in Abhängigkeit von einem Vergleich des Karteninspektionsergebnisses mit einem vorbestimmten Markierungsinspektionskriterium so, dass sie eine im Hinblick auf das zumindest eine Markierungsinspektionskriterium relativ zur Ist-Einstellung optimierte Soll-Einstellung des Markiersubsystems für einen nachfolgenden operativen Markierbetrieb des Kartenmarkiersystems definiert.

Unter einer "Einstellung" bzw. "Einstellen" im Sinne der Erfindung ist ein Justieren und/ oder Kalibrieren zu verstehen. Dabei ist unter Justieren ein Einstellen oder Abgleichen eines Messgerätes zu verstehen, um systematische Abweichungen so weit zu beseitigen, wie es für die vorgesehene Anwendung erforderlich ist. Justieren erfordert somit einen Eingriff, der das Messgerät bleibend verändert. Im Gegensatz dazu ist unter Kalibrieren ein Einmessen zu verstehen, bei dem kein Eingriff in das Messgerät durchgeführt wird, sondern ein Messprozess zur zuverlässig reproduzierbaren Feststellung der Abweichung eines Messgerätes gegenüber einem anderen Gerät oder einer anderen Referenz, die in diesem Fall auch als "Normal" bezeichnet werden, zu verstehen. Zur Kalibrierung gehört ein zweiter Schritt, nämlich die Berücksichtigung der ermittelten Abweichung bei der anschließenden Benutzung des Messgerätes zur, beispielsweise mathematischen, Korrektur der gewonnenen Messwerte.

Unter einem "automatisierten Ermitteln" einer "optimierten" Einstellung eines Systems ist ein Vorgang zu verstehen, der zumindest teilweise automatisch, insbesondere durch das einzustellende System selbst, erfolgt und bei dem Werte für einen oder mehrere einstellbare Parameter des Systems auf einer Messung beruhend so bestimmt werden, dass sich, wenn die Parameter auf die bestimmten Werte gesetzt werden, eine gegenüber dem der Messung zugrunde liegenden Ausgangszustand des Systems und bezüglich zumindest eines vorbestimmten Bewertungskriteriums (hier Referenzinspektionskriterium bzw. Markierungsinspektionskriterium) verbesserte Einstellung des Systems ergibt. Die verbesserte Einstellung muss dabei nicht zwingend ein absolutes Optimum aller möglichen Einstellungen darstellen.

Unter einem "Visionssubsystem" ist ein Teilsystem des Kartenmarkiersystems zu verstehen, welches zumindest eine zur visuellen Inspektion einer Karte oder eines, insbesondere ebenfalls kartenförmigen, Referenzelements vorgesehene Komponente des Systems enthält, wozu als Komponente insbesondere eine Bilderfassungsvorrichtung, wie etwa eine Kamera, gehören kann.

Unter einem "Markiersubsystem" ist entsprechend ein Teilsystem des Kartenmarkiersystems zu verstehen, welches zumindest eine zur Markierung einer Karte vorgesehenen Komponente des Systems enthält, wozu als Komponente insbesondere ein Markierungslaser und/oder eine Druckvorrichtung gehören kann.

Das Verfahren kann somit zumindest abschnittsweise, bevorzugt sogar vollständig, automatisch ablaufen, was insbesondere gegenüber früheren manuellen Einstellungsverfahren eine Reihe von Vorteilen mit sich bringen kann. Dazu können insbesondere ein oder mehrere, sogar sämtliche der folgenden gehören: Zeitersparnis, eine höhere Einstellgenauigkeit, eine vom Bediener unabhängige Wiederholbarkeit bei gleicher Einstellgenauigkeit, die Vermeidung von Einstellfehlern, insbesondere von schwer erkennbaren Einstellfehlern, eine vereinfachte Bedienung, die sich sogar je nach Verfahrensführung auf ein bloßes Aktivieren und nachfolgendes Deaktivieren des Einstellprozesses reduzieren kann, eine Wiederherstellung nach Verlust (etwa nach Defekten) oder zwischenzeitlicher Veränderung der Einstellungen, sowie eine Übertragbarkeit der gefundenen Einstellungen auf andere Kartenmarkiersysteme gleichen oder zumindest im Wesentlichen vergleichbaren Typs. Insbesondere wird mittels des Verfahrens nicht nur eine optimierte Einstellung jedes Subsystems für sich, sondern auch eine Einstellung, insbesondere Justierung und/ oder Kalibrierung, des Markiersubsystems relativ zum Visionssubsystem erreicht, sodass diese Ausrichtung mit den vorgenannten Vorteilen durchführbar ist.

Nachfolgend werden bevorzugte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Bei einigen Ausführungsformen wird gemäß dem Visionssubsystemeinstellungsprozess für zumindest ein Betriebsparameter des Visionssubsystems, welcher eines
oder mehrere der folgenden zumindest anteilig festlegt, eine entsprechende Soll-Einstellung ermittelt: (i) Eine räumliche Lage einer Kartenhalterung für eine zu inspizierende Karte relativ zu einer Bilderfassungsvorrichtung des Visionssubsystems; (ii) eine optische Vergrößerung des Visionssubsystems; (iii) ein optischer Fokus des Visionssubsystems; (iv) die Lage einer optischen Achse des Visionssubsystems; (v) eine Einstellung, insbesondere Beleuchtungseinstellung, einer zur Bestrahlung einer Karte während ihrer Inspektion mittels des Visionssubsystems vorgesehenen Strahlungsquelle, insbesondere Lichtquelle, des Visionssubsystems; (vi) einer Verzerrungskalibrierung zur Kompensation von etwaigen bei der Inspektion einer Karte durch das Visionssubsystem auftretenden Bildverzerrungen; (vii) einen Weißabgleich und/oder Schwarzabgleich des Visionssubsystems. Sämtlichen dieser Betriebsparameter ist es gemein, dass ihre Einstellung einen Einfluss auf ein beim Inspizieren des Referenzelements, sowie nachfolgend im operativen Markierbetrieb einer zu markieren Karte, gewonnenes Inspektionsergebnis haben kann, sodass eine Optimierung ihrer Einstellung durch Setzen auf die ermittelte jeweilige Soll-Einstellung, jedenfalls in aller Regel, mit einer Optimierung des Inspektionsergebnisses einhergeht.

Unter einer "räumlichen Lage" bzw. kurz "Lage" eines Objekts ist im Sinne der Erfindung eine räumliche Position und/oder eine räumliche Orientierung des Objekts zu verstehen. Die räumliche Lage kann somit insbesondere durch bis zu sechs Freiheitsgrade (drei für die Position sowie drei für die Orientierung) definiert sein, wobei nicht zwingend sämtliche dieser Freiheitsgrade durch das Kartenmarkiersystem zur Verfügung gestellt werden müssen. Beispielsweise könnte eine Kartenhalterung, welche eine räumliche Lage einer zu inspizierenden Karte oder eines zu inspizierenden Referenzelements festlegt, nur um eine einzige Achse drehbar gelagert sein, sodass dann zumindest die beiden weiteren Orientierungsfreiheitsgrade wegfallen.

Bei einigen dieser vorgenannten Ausführungsformen erfolgt das automatisierte Festlegen einer optimierten Soll-Einstellung des zumindest einen Betriebsparameters des Visionssubsystems ohne Berücksichtigung einer Verzerrungskalibrierung zur Kompensation von etwaigen bei der Inspektion einer Karte durch das Visionssubsystem auftretenden Bildverzerrungen, wenn der Betriebsparameter eines oder mehrere der folgenden zumindest anteilig festlegt: eine räumliche Lage einer Kartenhalterung für eine zu inspizierende Karte relativ zu einer Bilderfassungsvorrichtung des Visionssubsystems, eine optische Vergrößerung des Visionssubsystems, ein optischer Fokus des Visionssubsystems, die Lage einer optischen Achse des Visionssubsystems. Auf diese Weise kann das automatisierte Festlegen jeweiliger optimierter Soll-Einstellungen für diese genannten Betriebsparameter des Visionssubsystems selektiv ohne Berücksichtigung einer Verzerrungskalibrierung, die bei diesen Parametern die Messergebnisse möglicherweise unvorteilhaft verfälschen könnte, durchgeführt werden.

Bei einigen Ausführungsformen weist das Kartenmarkiersystem eine parametrisiert verfahrbare und/oder orientierbare Kartenhalterung zur Aufnahme des Referenzelements oder einer zu markierenden Karte auf, und gemäß dem Visionssubsystemeinstellungsprozess wird für zumindest ein Betriebsparameter des Visionssubsystems, der eine durch Verfahren und/oder Orientieren der Kartenhalterung erreichbare Inspektionslage der Kartenhalterung relativ zu einer Bilderfassungsvorrichtung des Visionssubsystems zumindest anteilig festlegt, eine entsprechende Soll-Einstellung ermittelt. Auf diese Weise wird eine durch die Lage der Kartenhalterung definierte und gemäß dem Visionssubsystemeinstellungsprozess optimierte Inspektionslage zumindest anteilig festgelegt, in der während des Visionssubsystemeinstellungsprozess das Referenzelement, sowie im nachfolgenden operativen Markierbetrieb die jeweils zu markierende Karte angeordnet wird.

Bei einigen Ausführungsformen weist der Visionssubsystemeinstellungsprozess folgende Teilprozesse, insbesondere in der genannten Reihenfolge, auf: (i) Bestimmen und Vornehmen einer optimierten Soll-Einstellung zumindest eines Betriebsparameters des Visionssubsystems, der zumindest anteilig eine räumliche Lage, insbesondere Orientierung, der Kartenhalterung relativ zum Visionssubsystems festlegt; (ii) Bestimmen und Vornehmen einer optimierten Soll-Einstellung zumindest eines Betriebsparameters des Visionssubsystems, der zumindest anteilig einen optischen Fokus des Visionssubsystems festlegt; und (iii) Bestimmen und Vornehmen einer optimierten Soll-Einstellung: (iii-1) zumindest eines Betriebsparameters des Visionssubsystems, der zumindest anteilig eine Verzerrungskalibrierung zur Kompensation von etwaigen bei der Inspektion durch das Visionssubsystem auftretenden Bildverzerrungen festlegt, und/oder (iii-2) zumindest eines Betriebsparameters des Visionssubsystems, der zumindest anteilig einen Weißabgleich und/oder Schwarzabgleich des Visionssubsystems festlegt. Diese Ausführungsformen stellen im Hinblick auf die Auswahl und insbesondere auch auf die Reihenfolge der einzelnen Teilprozesse bezüglich Relevanz für die Qualität der resultierenden Einstellungsoptimierung und den dazu erforderlichen Zeitbedarf besonders vorteilhafte Verfahrensabläufe dar.

Insbesondere weist bei einigen dieser Ausführungsformen der Visionssubsystemeinstellungsprozess folgende Teilprozesse in der genannten Reihenfolge auf: (i) Bestimmen einer optimierten Soll-Einstellung zumindest eines Betriebsparameters des Visionssubsystems, der zumindest anteilig eine räumliche Lage, insbesondere Orientierung, der Kartenhalterung relativ zum Visionssubsystem festlegt; (ii) Bestimmen einer optimierten Soll-Einstellung zumindest eines Betriebsparameters des Visionssubsystems, der zumindest anteilig einen optischen Fokus des Visionssubsystems festlegt; und (iii) erneutes Bestimmen einer optimierten Soll-Einstellung des zumindest eines Betriebsparameters des Visionssubsystems, der zumindest anteilig eine räumliche Orientierung der Kartenhalterung relativ zum Visionssubsystem festlegt. Diese Ausführungsformen stellen im Hinblick auf die Auswahl und insbesondere auch auf die Reihenfolge der einzelnen Teilprozesse optimierte Verfahrensabläufe dar, sich insbesondere dadurch auszeichnen, dass mögliche unerwünschte Veränderungen einer bereits vorgenommenen Soll-Einstellung bezüglich der räumlichen Orientierung der Kartenhalterung durch den nachfolgenden Teilprozess zur Optimierung der Fokuseinstellung, nachträglich nochmals korrigiert werden, so dass sich insgesamt mit nur wenigen Teilprozessen eine insbesondere bezüglich der Ergebnisqualität optimierte Soll-Einstellung des Satzes der involvierten Betriebsparameter und somit eine entsprechend optimierte Einstellung der Inspektionslage der Kartenhalterung ergibt.

Bei einigen Ausführungsformen erfolgt der Visionssubsystemeinstellungsprozess mehrstufig, wobei: (i) in jeder der Stufen der zumindest eine Betriebsparameter auf eine verschiedene Ist-Einstellung gesetzt und bei dieser Ist-Einstellung eine Inspektion des Referenzelements vorgenommen wird; und (ii) die Soll-Einstellung des Visionssubsystems in Abhängigkeit vom Vergleich der in den jeweiligen Stufen ermittelten Inspektionsergebnisse anhand des zumindest einen vorbestimmten Inspektionskriteriums festgelegt wird. Insbesondere kann der Vergleich der in den jeweiligen Stufen ermittelten Inspektionsergebnisse untereinander unter Verwendung des Inspektionskriteriums als Vergleichsmaßstab, oder aber als Vergleich eines in der jeweiligen Stufe ermittelten Inspektionsergebnisses mit einer durch das Inspektionskriterium selbst definierten Referenz erfolgen. Insbesondere könnte der Visionssubsystemeinstellungsprozess auch iterativ erfolgen, wobei jeweils in einer nachfolgenden Iteration ein in einer vorausgegangenen Stufe ermitteltes Inspektionsergebnis berücksichtigt wird, wie etwa zur Festlegung der Ist-Einstellung der nachfolgenden Stufe. So lässt sich eine einfache Automatisierung des Visionssubsystemeinstellungsprozesses erreichen, wobei die Bestimmung einer Soll-Einstellung insbesondere mittels, insbesondere linearer, Interpolation,Extrapolation oder Regression auf Basis der in den verschiedenen Stufen ermittelten Inspektionsergebnisse erfolgen kann.

Bei einigen Ausführungsformen weist der Visionssubsystemeinstellungsprozess des Weiteren auf: (i) Überprüfen des Referenzelements, insbesondere einer Referenzkarte mit Referenzmarkierung, mittels des Visionssubsystems, anhand von Referenzinformation dahingehend, ob es sich bei dem Referenzelement um ein gemäß der Referenzinformation korrektes oder fehlerfreies Referenzelement handelt; und (ii) Auslösen einer vorbestimmten Fehlerbehandlungsmaßnahme, wenn dies gemäß dem Ergebnis der Prüfung nicht der Fall ist. Auf diese Weise kann, bevorzugt zu Beginn des Visionssubsystemeinstellungsprozesses, ein falsches oder fehlerbehaftetes Referenzelement frühzeitig erkannt werden, und insbesondere vermieden werden, dass nachfolgende Schritte des Visionssubsystemeinstellungsprozesses aufgrund des mangelhaften Referenzelements zu fehlerhaften Ermittlungen von Soll-Einstellungen oder gar einem Scheitern des Visionssubsystemeinstellungsprozesses führen. Die Fehlerbehandlungsmaßnahme kann insbesondere eine Benachrichtigung, eine Unterbrechung oder Beendigung des Visionssubsystemeinstellungsprozesses oder das automatische Ersetzen des Referenzelements durch ein anderes vorgehaltenes Referenzelement sein.

Bei einigen Ausführungsformen wird gemäß dem Markiersubsystemeinstellungsprozess für zumindest ein Betriebsparameter des Markiersubsystems, welcher eines oder mehrere der folgenden zumindest anteilig festlegt, eine entsprechende Soll-Einstellung ermittelt: (i) eine räumliche Lage einer Kartenhalterung für eine zu markierende Karte relativ zu einer Markiervorrichtung des Markiersubsystems; (ii) eine optische Vergrößerung des Markiersubsystems; (iii) ein optischer Fokusabstand des Markiersubsystems; (iv) die Lage einer optischen Achse des Markiersubsystems; (v) eine Lagekalibrierung zur Kompensation von etwaigen Fehljustierungen des Markiersubsystems. Sämtlichen dieser Betriebsparameter des Markiersubsystems ist gemein, dass sie einen Einfluss auf die Qualität einer mittels des Markiersubsystems erzeugten Markierung auf einer Karte haben können, sodass es zweckmäßig ist, eine Optimierung der Einstellung dieser Betriebsparameter im Sinne der Erreichung einer optimierten Markierfunktion des Markiersubsystems und des Kartenmarkiersystems als Ganzes zu erreichen.

Die räumliche Lage einer zu markierenden Karte während des Markiervorgangs (Markierlage), wie sie insbesondere mittels der in Punkt (i) genannten Kartenhalterung definiert sein kann, kann sich dabei von der räumlichen Lage einer zu inspizierenden Karte während ihrer Inspektion mittels des Visionssubsystems (Inspektionslage) entweder unterscheiden, wozu insbesondere eine Verfahr- und/oder Orientierungsvorrichtung (insbesondere ein Kartenlift) zur Überführung der Karte zwischen beiden Lagen im Kartenmarkiersystem vorgesehen sein kann, oder aber beide Lagen können zusammenfallen. Letzteres kann im Falle einer Markierung mittels Bestrahlung (z.B. Lasermarkierung) insbesondere dadurch bewerkstelligt werden, dass das Visionssubsystem und das Markiersubsystem während ihres jeweiligen Betriebs jeweils so angeordnet sind, dass deren beider optische Achsen zusammenfallen (was insbesondere durch ein entsprechendes Verfahren zumindest eines der beiden Subsysteme möglich ist), oder aber so, dass eine entsprechende Lagekalibrierung, die insbesondere mittels einer entsprechenden mathematischen Abbildung (insbesondere Entzerrung) auf Seiten des Visionssubsystems und/oder des Markiersubsystems bewerkstelligt werden kann, zum Einsatz kommt, um die unterschiedliche Lage beider optischen Achsen zumindest anteilig zu kompensieren.

Bei einigen Ausführungsformen weist das Kartenmarkiersystem eine parametrisiert verfahrbare und/oder orientierbare Kartenhalterung auf und gemäß dem Markiersubsystemeinstellungsprozess wird für zumindest ein Betriebsparameter des Markiersubsystems, der eine durch Verfahren und/oder Orientieren der Kartenhalterung erreichbare Markierlage der Kartenhalterung relativ zu einer Markiervorrichtung des Markiersubsystems zumindest anteilig festlegt, eine entsprechende Soll-Einstellung ermittelt. Auf diese Weise kann mittels der Kartenhalterung die Lage einer zu inspizierenden und/oder zu markierenden Karte einerseits auf einfache Weise festgelegt und andererseits ein gezieltes Verfahren/Orientieren der Karte zwischen einer Markierposition und eine Inspektionsposition erreicht werden, indem die Kartenhalterung entsprechend kontrolliert (etwa mittels einer entsprechenden Steuerung oder Regelung) verfahren bzw. orientiert wird. Die Kartenhalterung kann insbesondere als gemeinsame Komponente des Visionssubsystem und des Markiersubsystems betrachtet werden, wobei ihre räumliche Lage bezüglich (i) einer Bilderfassungsvorrichtung des Visionssubsystems (Inspektionslage) sowie (ii) einer Markiervorrichtung des Markiersubsystems (Markierlage) jeweils individuell mittels einer entsprechenden Soll-Einstellung optimiert werden können.

Bei einigen Ausführungsformen weist der Markiersubsystemeinstellungsprozess folgende Teilprozesse in der genannten Reihenfolge auf: (i) Bestimmen und Vornehmen einer optimierten Soll-Einstellung zumindest eines Betriebsparameters des Visionssubsystems, der zumindest anteilig eine räumliche Lage der Kartenhalterung relativ zu einer Markiervorrichtung des Markiersubsystems oder eine entsprechende Lagekalibrierung oder eine Kombination aus beiden festlegt; (ii) Bestimmen und Vornehmen einer optimierten Soll-Einstellung zumindest eines Betriebsparameters des Markiersubsystems, der zumindest anteilig einen Fokusabstand des Markiersubsystems festlegt; und (iii) erneutes Bestimmen und Vornehmen einer optimierten Soll-Einstellung des zumindest eines Betriebsparameters des Visionssubsystems, der zumindest anteilig eine räumliche Orientierung der Kartenhalterung relativ zu dem Markiersubsystem oder eine entsprechende Lagekalibrierung oder eine Kombination aus beiden festlegt. Der Teilprozess (i) kann insbesondere als Grobpositionierung und/oder Groborientierung der Kartenhalterung ausgelegt sein, mit der die Kartenhalterung und somit gegebenenfalls eine darin befindliche Karte in eine Lage gebracht wird, bei der der nachfolgende Teilprozess (ii) bei dem insbesondere ein Positionsfreiheitsgrad mit einer Komponente entlang der optischen Achse (bevorzugt mit dieser zusammenfallend) der Markiervorrichtung des Markiersubsystems, insbesondere mit optimierter Ergebnisqualität, durchführbar ist. Der nachfolgende Teil-prozess (iii) kann sodann als nachträgliche Feinjustierung der Lage, insbesondere der Position der Kartenhalterung, ausgelegt sein, so dass sich insgesamt mit nur wenigen Teilprozessen eine insbesondere bezüglich der Ergebnisqualität optimierte Soll-Einstellung des Satzes der involvierten Betriebsparameter und somit eine entsprechend optimierte Einstellung der Markierlage der Kartenhalterung ergibt.

Bei einigen Ausführungsformen erfolgt der Markiersubsystemeinstellungsprozess mehrstufig, wobei: (i) In jeder der Stufen: der zumindest eine Betriebsparameter auf eine verschiedene Ist-Einstellung gesetzt wird, eine Karte bei dieser Ist-Einstellung mittels des Markiersubsystems unter Ausbildung einer vorbestimmten Referenzmarkierung markiert wird, und die markierte Karte mittels des gemäß seiner im Visionssubsystemeinstellungsprozess ermittelten Soll-Einstellung eingestellten Visionssubsystems inspiziert wird; und (ii) die Soll-Einstellung des Visionssubsystems in Abhängigkeit vom Vergleich der in den jeweiligen Stufen ermittelten Inspektionsergebnisse anhand des zumindest einen vorbestimmten Markierungsinspektionskriterium festgelegt wird.

Insbesondere kann der Vergleich der in den jeweiligen Stufen ermittelten Inspektionsergebnisse untereinander unter Verwendung des Inspektionskriteriums als Vergleichsmaßstab, oder aber als Vergleich eines in der jeweiligen Stufe ermittelten Inspektionsergebnisses mit einer durch das Inspektionskriterium selbst definierten Referenz erfolgen. Insbesondere kann der Markiersubsystemeinstellungsprozess auch iterativ erfolgen, wobei jeweils in einer nachfolgenden Iteration ein in einer vorausgegangenen Stufe ermitteltes Inspektionsergebnis berücksichtigt wird, wie etwa zur Festlegung der Ist-Einstellung der nachfolgenden Stufe bezüglich des zumindest einen Betriebsparameters der Markiersubsystems. So lässt sich eine einfache Automatisierung des Markiersubsystemeinstellungsprozesses erreichen, wobei die Bestimmung einer Soll-Einstellung insbesondere mittels, insbesondere linearer, Interpolation, Extrapolation oder Regression auf Basis der in den verschiedenen Stufen ermittelten Inspektionsergebnisse erfolgen kann.

Bei einigen Ausführungsformen wird gemäß dem Markiersubsystemeinstellungsprozess für zumindest einen Betriebsparameter des Markiersubsystems, welcher einen optischen Fokusabstand des Markiersubsystems zumindest anteilig festlegt, eine entsprechende Soll-Einstellung im Hinblick darauf ermittelt, dass mit dieser Soll-Einstellung eine Minimierung einer Abweichung einer vorbestimmten geometrischen Eigenschaft der Referenzmarkierung, insbesondere zumindest einer Abmessung oder ihrer Fläche, gegenüber einer durch das Markierungsinspektionskriterium gekennzeichnete Referenzgröße erreicht wird. Der optische Fokusabstand wird somit nicht, wie sonst in der Optik meist üblich, so bestimmt, dass der resultierende Fokuspunkt zwingend auf dem Objekt (hier der zu markierenden Kartenoberfläche) liegt, sondern so, dass das auf der Karte erzeugte Bild einer zur Markierung, beispielsweise mittels eines Lasers, verwendeten optische Abbildung eine vorbestimmte Größe, insbesondere eine zum Zwecke der Personalisierung geforderte vorbestimmte Soll-Größe, aufweist.

Bei einigen Ausführungsformen erfolgt bzw. erfolgen der Visionssubsystemeinstellungsprozess, der Markiersubsystemeinstellungsprozess oder beide sowohl in Bezug auf eine Vorderseite als auch in Bezug auf eine Rückseite des Referenzelements bzw. der zu markierenden Karte Somit wird auch eine beidseitige Personalisierung der Karte ermöglicht. Dies kann insbesondere dadurch erreicht werden, dass für Vorderseite und Rückseite jeweils ein eigenes Visionssubsystem bzw. Markiersubsystem vorgesehen sind, oder aber dadurch, dass eine Vorrichtung (insbesondere Drehvorrichtung) vorgesehen ist, um wahlweise die Vorderseite und oder die Rückseite der Karte demselben Visionssubsystem bzw. Markiersubsystem zugänglich zu machen.

Insbesondere kann dazu, gemäß einiger Ausführungsformen das Referenzelement bzw. die Karte durch das Kartenmarkiersystem zwischen der Inspektion seiner Vorderseite und der Inspektion seiner Rückseite im Rahmen des automatisierten Festlegens einer optimierten Einstellung des zumindest eines Betriebsparameters gedreht werden, um nach der Vorderseite auch die Rückseite der Inspektion durch dasselbe Visionssubsystem zugänglich zu machen, oder umgekehrt. Auf diese Weise kann der Aufwand für getrennte Visionssubsysteme bzw. Markiersubsysteme für Vorder- und Rückseite der Karten auf einfache Weise vermieden werden.

Bei einigen Ausführungsformen weist das Verfahren des Weiteren einen Abgleichprozess zum automatischen Abgleich der von dem Visionssubsystem und dem Markiersubsystem jeweils verwendeten Koordinatensysteme auf. Dieser Abgleich kann insbesondere einen oder mehrere, bevorzugt sämtliche der folgenden Aspekte der Koordinatensysteme betreffen: Nullpunkte, Skalierungsfaktoren, Achsenorientierungen, Neigungswinkel. So kann auch in Fällen, bei denen das Visionssubsystem und das Markiersubsystem unterschiedliche Koordinatensysteme verwenden, sichergestellt werden, dass Korrekturinformationen, etwa Positionskorrekturen oder Orientierungskorrekturen vom Visionssubsystem fehlerfrei an das Markiersubsystem übergeben und dort zur Vornahme einer entsprechend korrekten Markierung berücksichtigt werden können.

Bei einigen Ausführungsformen werden die mittels des Verfahrens bestimmten Soll-Einstellungen von Betriebsparametern des Visionssubsystems und/oder des Markiersubsystems, zumindest anteilig, zur Wiederverwendung für eine spätere erneute Einstellung des Kartenmarkiersystems oder als Konfigurationsdaten zur entsprechenden datenbasierten Konfigurierung eines weiteren Kartenmarkiersystems gespeichert oder ausgegeben. Dies kann, bezüglich der ersten genannten Anwendung, insbesondere vorteilhaft dazu eingesetzt werden, das Kartenmarkiersystem mit minimalem Aufwand erneut einzustellen, wenn eine vorherige Einstellung, etwa aufgrund eines Defekts, einer Wartung oder eines Komponentenwechsels beschädigt oder verloren gegangen ist. Bezüglich der zweiten genannten Anwendung erlaubt dies eine schnelle und sichere Neukonfiguration eines weiteren vergleichbaren Kartenmarkiersystems, ohne dass dort das erfindungsgemäße Verfahren selbst, wie vorausgehend beschrieben, durchgeführt werden muss.

Ein zweiter Aspekt der Erfindung betrifft ein Kartenmarkiersystem, insbesondere zur Personalisierung von Kunststoffkarten mittels Lasermarkierung, wobei das Kartenmarkiersystem ein Markiersubsystem zum Markieren einer Karte sowie ein Visionssubsystem zum Inspizieren der Karte aufweist und eingerichtet ist, das Verfahren gemäß dem ersten Aspekt der Erfindung, insbesondere gemäß einer oder mehrerer der hierin beschriebenen Ausführungsformen dazu, auszuführen.

Ein dritter Aspekt der Erfindung betrifft ein Computerprogramm, das konfiguriert ist, ein Kartenmarkiersystem gemäß dem zweiten Aspekt der Erfindung zu veranlassen, das Verfahren gemäß dem ersten Aspekt der Erfindung, insbesondere gemäß einer oder mehrerer der hierin beschriebenen Ausführungsformen dazu, auszuführen.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmodulen aufweisen.

Das Kartenmarkiersystem kann entsprechend einen Speicher aufweisen, in dem das Computerprogramm abgelegt ist. Alternativ kann das Kartenmarkiersystem auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Die in Bezug auf den ersten Aspekt der Erfindung erläuterten Merkmale und Vorteile gelten entsprechend auch für die weiteren Aspekte der Erfindung.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigen:
Fig. 1 schematisch eine Kartenmarkiersystem, gemäß einer Ausführungsform der Erfindung;
Fig. 2 schematisch ein Flussdiagramm zur Veranschaulichung einer Ausführungsform des Visionssubsystemeinstellungsprozesses im Rahmen des erfindungsgemäßen Verfahrens;
**Fig. 3A - 3C** schematisch ein Flussdiagramm zur Veranschaulichung einer Ausführungsform des Markiersubsystemeinstellungsprozesses im Rahmen des erfindungsgemäßen Verfahrens;
**Fig. 4** schematisch ein beispielhaftes Layout eines Referenzelements zur Verwendung im Rahmen des Visionssubsystemeinstellungsprozesses, insbesondere aus Fig. 2;
**Fig. 5A und 5B** schematisch die Layouts zweier beispielhafter alternativer, jeweils im Rahmen des Markiersubsystemeinstellungsprozesses, insbesondere aus Fig. 3, erzeugte und verwendete Referenzmarkierungen; und
**Fig.6** eine Illustration zur Erläuterung eines Abgleichs der von dem Visionssubsystem und dem Markiersubsystem jeweils verwendeten Koordinatensysteme, gemäß einer beispielhaften Ausführungsform.

In den Figuren werden durchgängig dieselben Bezugszeichen für dieselben oder einander entsprechenden Elemente der Erfindung verwendet.

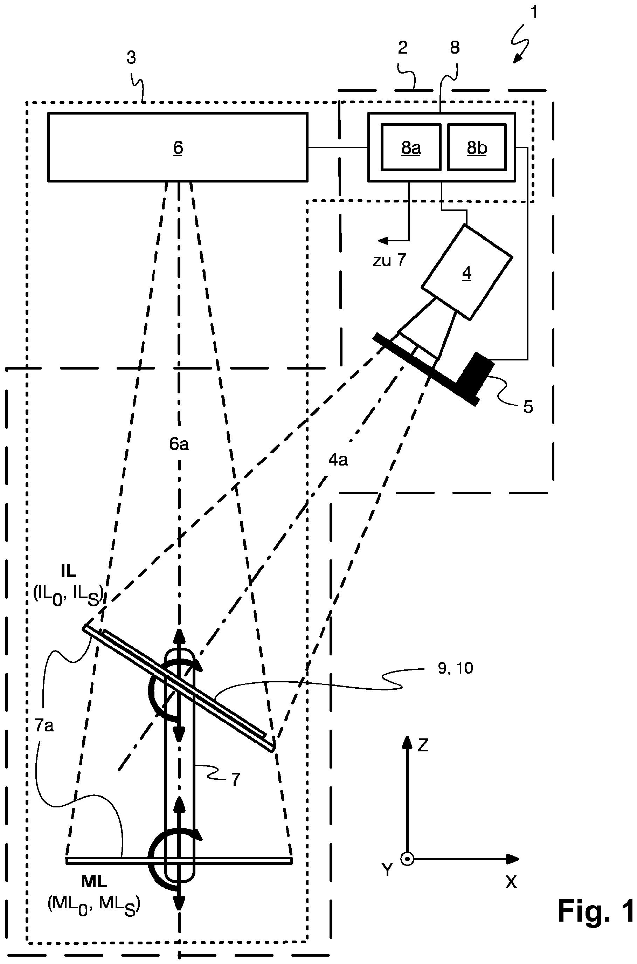

Das beispielhafte Kartenmarkiersystem 1 aus **Fig. 1** weist ein Visionssubsystem 2 sowie ein Markiersubsystem 3 auf. Zum Visionssubsystem 2 gehört insbesondere eine Bilderfassungsvorrichtung 4 in Form einer Kamera, mit einer vorgeschalteten Blendenvorrichtung (Shuttervorrichtung) 5 zur Einstellung eines Schwarz/Weiß-Abgleichs der Bilderfassungsvorrichtung 4. Zum Markiersubsystem 3 gehört insbesondere eine Markiervorrichtung 6, die insbesondere in Form eines Markierlasers ausgebildet sein kann, der konfiguriert ist, mittels seines Laserstrahls die Oberfläche einer Kunststoffkarte 9 gemäß einem vorgegebenen Muster, das insbesondere einen Schriftzug, eine Zahlenfolge, ein Codemuster (z.B. Barcode, QR-Code usw.) und/oder ein Bildelement enthalten kann, zu verfärben, um eine Personalisierung zu erzeugen. Die Karte 9 kann beispielsweise eine Chipkarte, Ausweiskarte oder Mitgliedskarte sein, welche in Form eines Kunststofflaminats, gegebenenfalls mit darin integrierten Komponenten wie beispielsweise Halbleiterchips, Magnetstreifen oder Antennen, ausgeführt ist.

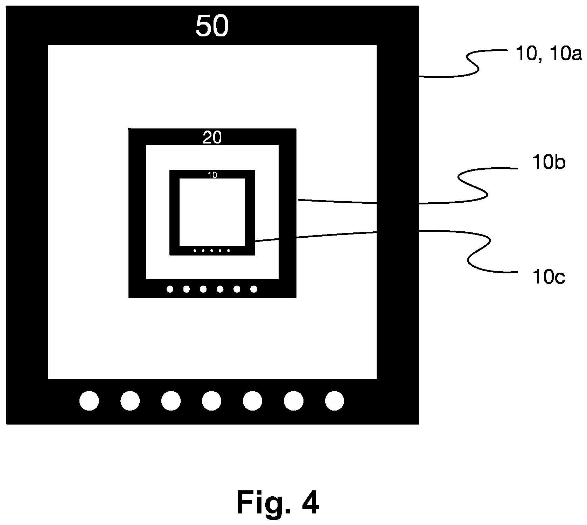

Darüber hinaus weisen das Visionssubsystem 2 sowie das Markiersubsystem 3 eine Steuervorrichtung 8, die eine Prozessorplattform 8a sowie einen Programm- und Datenspeicher 8b aufweist, sowie einen Kartenlift 7 mit einer von der Steuervorrichtung 8 gesteuert (oder geregelt) in X-, Y- und Z-Richtung (vgl. eingeblendetes Koordinatensystem) verfahrbaren und zumindest um eine Achse schwenkbaren und somit orientierbaren (in Fig. 1 beispielhaft für die senkrecht zur Bildebene stehende Y-Achse dargestellt) Kartenhalterung 7a als gemeinsame Komponenten auf. Dabei ist die Kartenhalterung 7a insbesondere zwischen einer Markierlage ML, in der sie bezüglich einer optischen Achse 6a der Markiervorrichtung 5 ausgerichtet ist, und einer Inspektionslage IL, bei der sie bezüglich einer optischen Achse 4a der Bilderfassungsvorrichtung 4 ausgerichtet ist, mittels des Kartenlifts 6 bidirektional überführbar. Die Inspektionslage IL (in der sich in Fig. 1 die Karte 9 oder ein Referenzelement 10 (vgl. **Fig. 4**) beispielhaft befindet) sowie die Markierlage ML sind jeweils konfigurierbar, d.h. mittels einer entsprechenden Parametrierung einer Steuerung durch die Steuervorrichtung 8 einstellbar, die zu diesem Zweck mit den durch sie gesteuerten Komponenten des Kartenmarkiersystems 1 über entsprechende Steuer- und Datenleitungen verbunden ist, die wahlweise, zumindest für einige der Komponenten, auch als gemeinsamer Bus ausgeführt sein können.

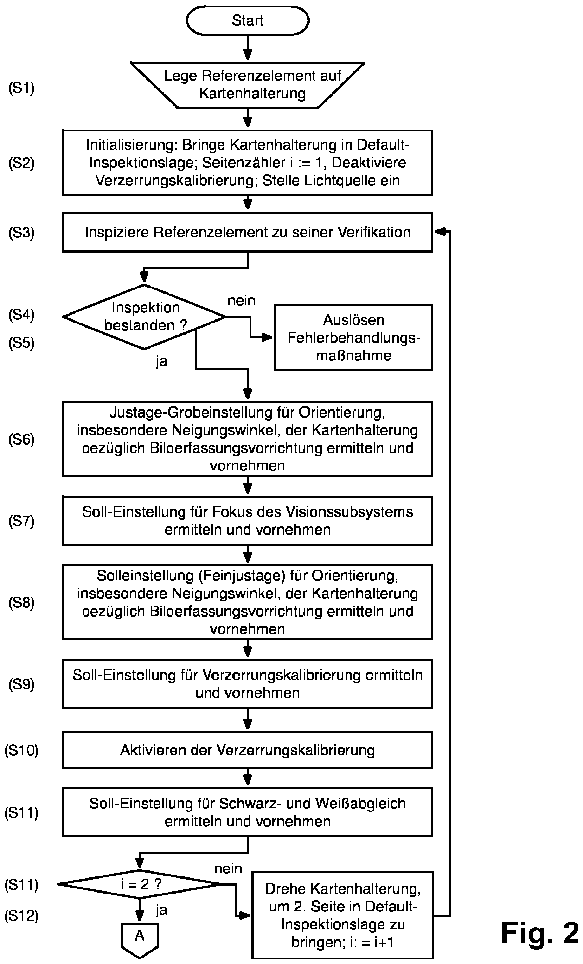

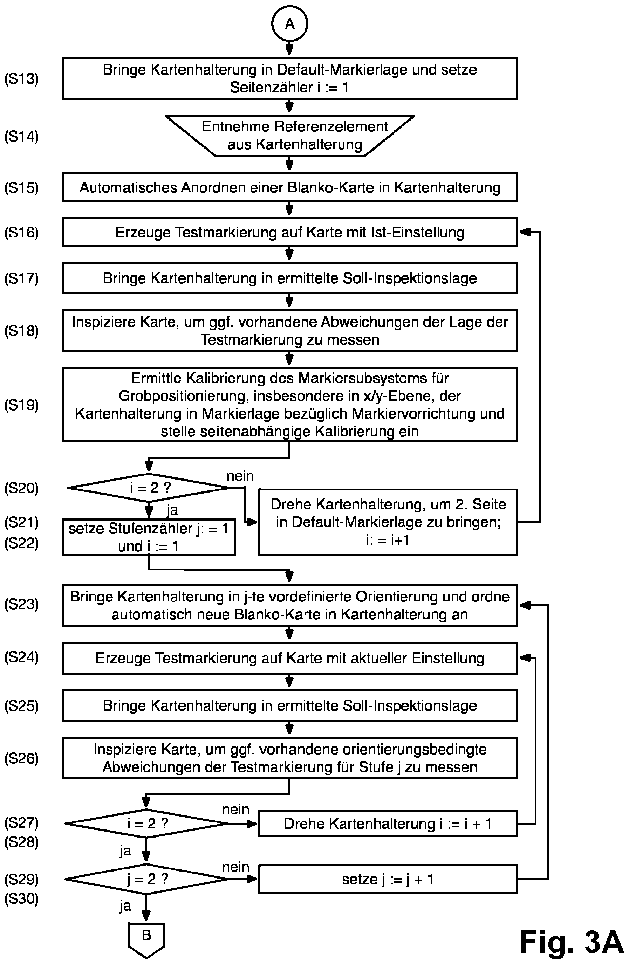

Die Steuerung des Kartenmarkiersystems 1 erfolgt mittels der Steuervorrichtung 8, die zu diesem Zweck ein im Speicher 8b abgelegtes Computerprogram aufweist, welches auf der Prozessorplattform 8a ablauffähig ist und bei seinem Ablauf das Kartenmarkiersystem 1 so steuert, dass dieses ein erfindungsgemäßes Verfahren ausführt. Insbesondere kann das Computerprogramm so konfiguriert sein, dass es bei seinem Ablauf das Kartenmarkiersystem 1 so steuert, dass dieses das nachfolgend in den Figuren 2 und 3A bis 3C illustrierte Verfahren gemäß einer bevorzugten Ausführungsform der Erfindung ausführt.

**Fig. 2** zeigt eine entsprechende Ausführungsform eines Visionssubsystemeinstellungsprozesses des Verfahrens, der zum automatisierten Ermitteln einer optimierten Soll-Einstellung des Visionssubsystems 2 dient und nachfolgend unter Bezugnahme auf das beispielhafte Kartenmarkiersystem aus Fig. 1 erläutert wird.

Zu Beginn des Verfahrens wird in einem Schritt S1 ein Referenzelement 10 (vgl. **Fig. 4**) in die Kartenhalterung 7a, je nach Art der Kartenhalterung 7a eingelegt, eingeführt bzw. allgemein angeordnet. Dieser Verfahrensschritt kann insbesondere entweder (wie dargestellt) manuell durch einen Benutzer des Kartenmarkiersystems 1 oder alternativ automatisch mittels einer entsprechenden Zufuhr des Referenzelements 9 erfolgen. Sodann wird in einem Schritt S2 das Visionssubsystem initialisiert, indem insbesondere die Kartenhalterung 7a in eine vorgegebene Default-Inspektionslage IL₀ gebracht, ein Seitenzähler i auf einen Ausgangswert 1 initialisiert und eine im Kartenmarkiersystem 1 vorgesehene Verzerrungskalibrierung, die insbesondere mittels des im Speicher 8b abgelegten Computerprogramms implementiert sein kann, auf einen deaktivierten Modus gesetzt werden. Die Verwendung eines Seitenzählers oder auch anderer Zähler, stellt hierbei nur eine von vielen möglichen Implementierungsvarianten dar und ist keinesfalls zwingend erforderlich, sondern hier zum Zwecke der besseren Illustration des Verfahrens gewählt. Außerdem kann eine Einstellung einer Lichtquelle (nicht dargestellt) der Bilderfassungsvorrichtung 4 zu Beleuchtung einer Karte 9 bzw. des Referenzelements 10 in der Inspektionslage IL₀ in Abhängigkeit beispielsweise von Umgebungslichtverhältnissen und/oder einer gemessenen Helligkeit der Oberfläche der Karte 9 bzw. des Referenzelements 10 einmalig oder mehrfach im Verfahrensablauf vorgenommen werden, insbesondere unmittelbar vor jedem Inspektionsschritt.

Zudem wird in einem Schritt S3 mittels des Visionssubsystems das in der Kartenhalterung 7a befindliche Referenzelement inspiziert, um zu verifizieren, dass es sich um ein korrektes und fehlerfreies Referenzelement handelt. Scheitert diese Verifikation (S4 - nein), so wird in einem Schritt S5 eine vorbestimmte Fehlerbehandlungsmaßnahme ausgelöst, die insbesondere das Ausgeben einer entsprechenden Fehlermeldung und/oder ein Abbrechen des Verfahrens beinhalten kann. Andernfalls (S4 - ja), erfolgt ein erster Einstellungsschritt S6, bei dem eine optimierte aber noch vorläufige Einstellung (Grobeinstellung) bezüglich einer Orientierung, insbesondere bezüglich eines Neigungswinkels, der Kartenhalterung 7a relativ zur optischen Achse 4a der Bilderfassungsvorrichtung 4 ermittelt wird und die ermittelte Einstellung in Form einer entsprechenden Justierung des Kartenlifts 7 bzw. seiner Kartenhalterung 7a relativ zur Bilderfassungsvorrichtung 4 vorgenommen wird.

Das Ermitteln der Einstellung für die Orientierung kann insbesondere anhand der bekannten Kantenlängen des Referenzelements erfolgen. Bei dem beispielhaften Referenzelement 10 aus Fig. 4, bei dem je nach eingestellter Vergrößerung des Visionssubsystems eines der drei gezeigten, unterschiedlich großen jeweils quadratischen Referenzlayouts 10a bis 10c verwendet werden kann, kann die Orientierung insbesondere dadurch ermittelt werden, dass aus einer gemessenen unterschiedlichen Kantenlänge des von der Bilderfassungsvorrichtung 4 erfassten Bildes des entsprechenden Referenzlayouts 10a, 10b, bzw. 10c auf entsprechende Ist-Neigungswinkel geschlossen wird und daraus eine erforderliche Korrektur zur Ableitung der Grobeinstellung berechnet wird. Alternativ dazu kann die Ist-Orientierung der Kartenhalterung 7a auch für jede Drehachse so schrittweise oder kontinuierlich durchgefahren werden, bis schließlich auch im erfassten Bild wieder ein quadratisches Abbild des entsprechenden Referenzlayouts erscheint, so dass die so gefundene Einstellung als Grobeinstellung verwendet werden kann. Die sich in ihrer Größe unterscheidenden verschieden beispielhaften Referenzlayouts 10 a-c aus Fig. 4 sind jeweils durch eine entsprechende Lochkodierung (die Anzahl der Löcher indiziert die Größe) im unteren Rahmenbereich und/oder eine entsprechende Zahlenangabe im oberen Rahmenbereich zu ihrer, von einer ihrer scheinbaren Größe in einem Abbild unabhängigen, Unterscheidbarkeit codiert.

Nachfolgend wird im einen weiteren Schritt S7 eine Soll-Einstellung für den Fokus des Visionssubsystem 2 ermittelt und vorgenommen. Dazu kann insbesondere ein interaktiver Prozess verwendet werden, bei dem der Kartenlift 7 entlang der Z-Richtung in verschiedene Stellungen gebracht wird und entweder eine der Stellungen, bei der die erfasste Größe des Bildes des Referenzelements 10, d. h. seines entsprechenden betrachteten Referenzlayouts 10 a-c, beispielsweise seine Kantenabmessung oder seine Fläche, einem vorgegebenen Referenzwert am nächsten kommt, ausgewählt werden. Alternativ dazu kann eine optimierte Stellung des Kartenlifts 7 entlang der Z-Richtung und somit eine Soll-Einstellung für den Fokus auch mittels, insbesondere linearer, Interpolation, Extrapolation oder Regression aus den gewonnenen Größenmesswerten für zumindest zwei der Stellungen berechnet werden.

Es folgt ein Schritt S8, der dem vorausgegangenen Schritt S6 gleicht, und nun zur Ermittlung und Vornahme einer Soll-Einstellung für die Orientierung, insbesondere die Neigungswinkel, der Kartenhalterung 7a bezüglich der optischen Achse 4a der Bilderfassungsvorrichtung 4 dient. Mithilfe dieser Feineinstellung können etwaige, durch den Schritt S7 verursachte Dejustierungen der zuvor im Schritt S6 vorgenommenen Grobeinstellung zur Erreichung eines optimierten Einstellungsergebnisses korrigiert werden. Die mittels der Schritte S6 bis S8 ermittelte Soll-Einstellung für die Lage der Kartenhalterung 7a definiert eine optimierte Soll-Inspektionslage IL_{S}, die im Weiteren während des nachfolgenden Verkehrssystemeinstellungsprozesses Verwendung findet.

In einem weiteren Schritt S9 kann eine etwaige trotzdem verbliebene optische Verzerrung des Abbilds des Referenzelements 10 auf ähnliche Weise, wie vorausgehend im Zusammenhang mit Schritt S6 beschrieben, bestimmt werden und daraus eine Verzerrungskalibrierung zu Kompensation dieser verbleibenden optischen Verzerrung berechnet und als Soll-Einstellung eines entsprechenden Betriebsparameters des Visionssubsystems 2 festgelegt werden. Diese Soll-Einstellung kann insbesondere, wie alle anderen im Laufe des Verfahrens ermittelten Soll-Einstellungen auch, im Speicher 8b zur späteren Verwendung und/oder Ausgabe an einer Schnittstelle gespeichert werden.

Im Schnitt S10 wird die bestimmte Verzerrungskalibrierung sodann aktiviert, bevor in einem weiteren Schritt S11 eine Soll-Einstellung für einen Schwarz- und Weißabgleich der Bilderfassungsvorrichtung 4 ermittelt und vorgenommen wird. Dazu wird die Kartenhalterung 7a mit dem Referenzelement 10 auf eine durch die vorausgehend ermittelten Soll-Einstellungen definierte Lage gebracht und zunächst ein Weißabgleich bei geöffneter Blende der Blendenvorrichtung 5 vorgenommen. Sodann wird die Blende geschlossen, um die Bildöffnung der Bilderfassungsvorrichtung 4 zu verschließen, und somit insbesondere auch den Strahlengang zwischen der Inspektionslage IL und der Bilderfassungsvorrichtung 4 zu unterbrechen. Es folgt entsprechend ein Schwarzabgleich der Bilderfassungsvorrichtung 4. Sodann wird die Blende wieder geöffnet. Der Weißabgleich bzw. Schwarzabgleich also solcher kann auf eine üblichem bekannte, insbesondere in der Kameratechnik bekannte, Weise erfolgen.

Im Schritt S11 wird nun anhand des Seitenzählers i geprüft, ob die andere Seite des Referenzelements 10 bzw. gleichbedeutend die Stellung der Kartenhalterung 7a im invertierten (umgedrehten) Zustand noch auf gleiche Weise dem Verfahren unterzogen werden muss. Ist dies der Fall (S11 - nein), wird die Kartenhalterung 7a im Schritt S12 entsprechend umgedreht (invertiert), um die andere Hauptseite des Referenzelements 10 in die Default-Inspektionslage IL₀ zu bringen. Außerdem wird der Seitenzähler i inkrementiert. Sodann wird zum Schritt S3 zurückverzweigt, um die Schritte S3 bis S11 erneut, diesmal jedoch in Bezug auf die andere Seite des Referenzelements 10 zu durchlaufen. Alternativ dazu ist es auch möglich, das Verfahren so zu gestalten, dass nicht erst nach seinem erstmaligen vollständigen Durchlauf, sondern bereits nach einem oder mehreren der vorausgegangenen Einstellungsschritte zwischenzeitlich jeweils ein oder mehrere Schritte zur entsprechenden Behandlung der zweiten Seite des Referenzelements 10 erfolgen.

Wie durch den Verbinder A dargestellt, geht das Verfahren sodann in den Markiersubsystemeinstellungsprozess über, der in den **Figuren 3A bis 3C** illustriert ist und nun wiederum unter Bezugnahme auf das Kartenmarkiersystem 1 aus Fig. 1 erläutert wird. Zunächst wird dazu die Kartenhalterung 7a in eine Default-Markierlage ML₀ gebracht und der Seitenzähler i wieder initialisiert. Im Schritt S14, wird manuell oder alternativ auch automatisch das Referenzelement 10 von der Kartenhalterung 7a entfernt und im Schritt S15 stattdessen eine erste Karte 9, bevorzugt eine noch keinerlei Personalisierung aufweisende Karte (Blankokarte) in der Kartenhaltung 7a angeordnet.

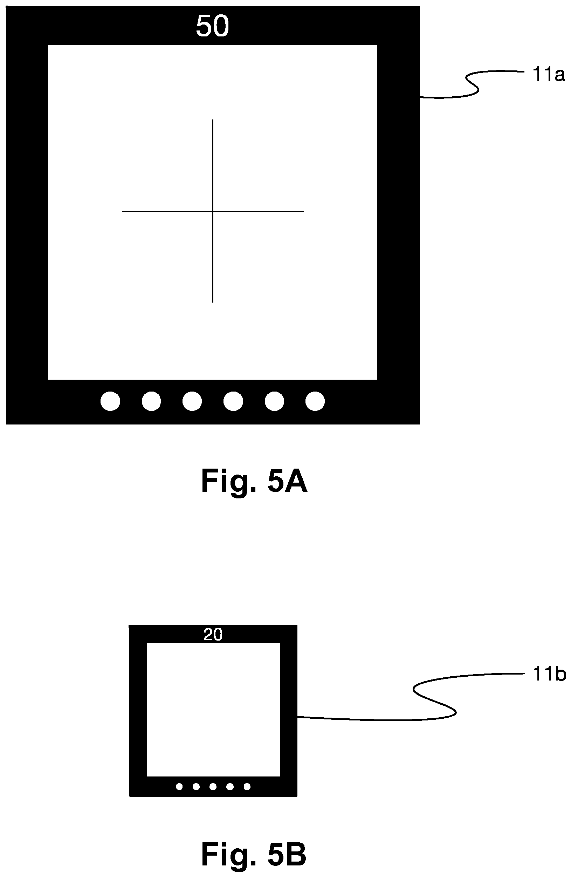

Sodann wird im Schritt S16 mittels der Markiervorrichtung 6 des Markiersubsystem 3 eine vorbestimmte Testmarkierung auf der Karte 9 erzeugt. Die Testmarkierung kann dabei insbesondere eine der in den **Figuren 5A und 5B** gezeigten Testmarkierungen 11a bzw. 11b entsprechen, die sich untereinander gleichen, jedoch unterschiedliche Größen aufweisen, was ebenso wie schon beim Referenzelement 10, durch eine entsprechende Lochkodierung (die Anzahl der Löcher indiziert die Größe) im unteren Rahmenbereich und eine entsprechende Zahlenangabe im oberen Rahmenbereich kenntlich gemacht ist. Bevorzugt wird im Schritt S16 das kleinere Referenzlayout 11b eingesetzt, da dieses auch bei etwaigen gröberen Dejustierungen aufgrund seiner geringeren Größe mit höherer Wahrscheinlichkeit vollständig als Markierung auf der Karte abgebildet wird, als das größere Referenzlayout 11a.

Nunmehr wird im Schritt S17 die Kartenhalterung 7a mit der Karte 9 in die gemäß Fig. 2 ermittelte Soll-Inspektionslage IL_{S} gebracht und im Schritt S18 die Karte inspiziert, um gegebenenfalls vorhandene Abweichungen der Lage der darauf ausgebildeten Testmarkierung, insbesondere in Bezug auf die optische Achse 4a der Bilderfassungsvorrichtung 4, zu messen. Im Schritt S19 folgt sodann auf Basis des Inspektionsergebnisses aus Schritt S18 die Ermittlung und Vornahme einer ersten Kalibrierung des Markiersubsystems 3 zum Zwecke einer Grobpositionierung der Kartenhalterung 7a bzw. der Karte 9, in der Markierlage ML, insbesondere in der X/Y-Ebene bezüglich der optischen Achse 6a der Markiervorrichtung 6. Die Ermittlung einer Kalibrierung kann dabei insbesondere mittels Bestimmung entsprechender Korrekturwerte (insbesondere bezüglich der X-und der Y-Dimension) auf Basis der gemessenen Abweichung und zu deren nachfolgender Kompensation bei der Erzeugung weiterer Markierungen unter Berücksichtigung der Kalibrierung erfolgen.

Sodann wird im Schritt S20 anhand des Seitenzählers i geprüft, ob die zweite Seite der Karte 9 noch dem Verfahren unterzogen werden muss, und wenn dies der Fall ist (S20 - nein) wird die Kartenhalterung 7a mit der Karte 9 Schritt S21 umgedreht, um nun die zweite Seite der Karte 9 in die Default-Markierlage ML₀ zu bringen. Zudem wird der Seitenzähler i inkrementiert und zum Schritt S16 zurückverzweigt. Andernfalls (S20 - ja) werden im Schritt S22 ein Stufenzähler j sowie erneut der Seitenzähler i initialisiert.

Es folgt ein die Schritte S23 bis S31 aufweisender mehrstufiger (hier beispielhaft zweistufiger) Teilprozess zu Ermittlung einer optimierten Orientierung der Kartenhalterung 7a in der Markierungslage ML, wozu zunächst in einem Schritt S23 die Kartenhalterung 7a in eine stufenspezifische, vordefinierte Ist-Orientierung gebracht wird und anstelle der bisherigen ersten Karte eine neue zweite Karte 9, bevorzugt Blankokarte, an der Kartenhalterung 7a angeordnet wird. Sodann wird in einem Schritt S24 unter Berücksichtigung der zuvor im Schritt S19 ermittelten Kalibrierung mittels der Markiervorrichtung 6 auf der Karte 9 eine Testmarkierung, bevorzugt nun gemäß dem Referenzlayout 11a aus Fig. 5A, erzeugt und die Kartenhalterung 7a mit der Karte 9 anschließend im Schritt S25 in die Soll-Inspektionslage IL_{S} gebracht. Dort wird sie im Schritt S26 von dem Visionssubsystem 2 inspiziert, um anhand einer Vermessung der Testmarkierung für die aktuelle Stufe j gegebenenfalls vorhandene orientierungsbedingte Abweichungen ihrer Lage, insbesondere relativ optischen Achse 4a der Bilderfassungsvorrichtung 4, zu messen.

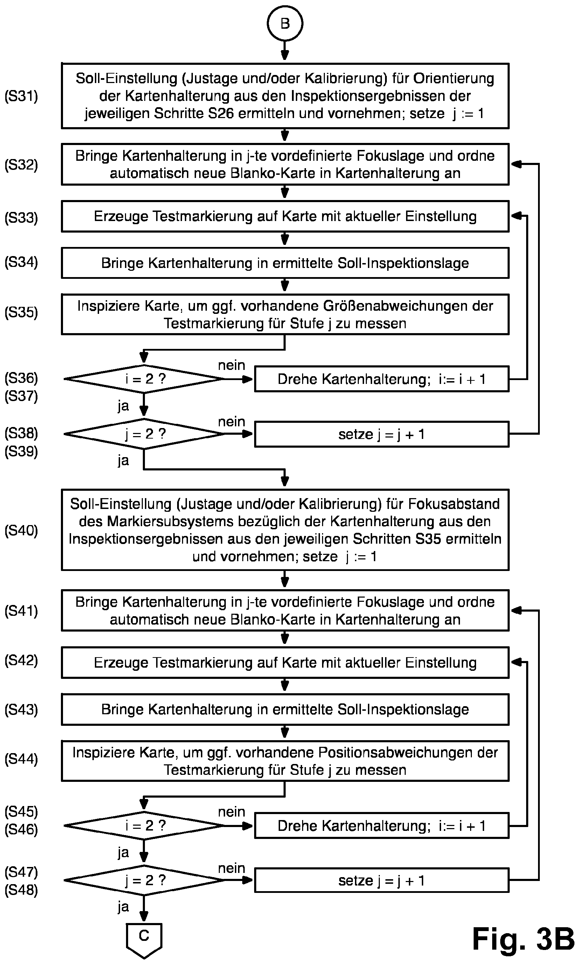

Wenn im Schritt S27 anhand des Seitenzählers i erkannt wird, dass auch noch die zweite Seite der Karte 9 zu behandeln ist (S27 - nein), wird die Kartenhalterung 7a mit der Karte 9 im Schritt S 28 wiederum umgedreht, der Seitenzähler i inkrementiert und zum Schritt S24 zurückverzweigt. Andernfalls (S27 - ja) wird im Schritt S29 anhand des Stufenzählers j geprüft, ob noch weitere Stufen des Teilprozesses zu durchlaufen sind. Ist dies der Fall (S29 - nein), wird der Stufenzähler j inkrementiert und zum Schritt S23 zurückverzweigt, wo anstelle der bisherigen Karte eine dritte Karte 9, bevorzugt wieder ein Blankokarte, an der Kartenhaltung 7a angeordnet wird um nachfolgend eine entsprechende Messung bei einer anderen Orientierung vorzunehmen. Andernfalls (S29 - ja) wird zudem in **Figur 3B** dargestellten Verfahrensabschnitt verzweigt, wie mittels des Verbinders B dargestellt, und auf Basis der Inspektionsergebnisse aus den jeweiligen Schritten S26 für die verschiedenen Stufen eine Soll-Einstellung für die Orientierung der Kartenhalterung 7a ermittelt und vorgenommen, insbesondere als Justage und/oder Kalibrierung. Zudem wird der Stufenzähler j erneut initialisiert.

Es folgt ein weiterer mehrstufiger Teilprozess zur Ermittlung und Vornahme einer optimierten Soll-Einstellung für den Fokusabstand des Markiersubsystems 3, der die Schritte S32 bis S40 aufweist. Dazu wird zunächst im Schritt S32 wiederum anstelle der bisherigen Karte 9 eine vierte Karte 9, wieder bevorzugt eine Blankokarte, an der Kartenhaltung 7a angeordnet und die Kartenhalterung 7a in eine stufenspezifische vordefinierte Fokuslage (entlang der Z-Richtung) gebracht, wobei die bisher ermittelten Soll-Einstellungen der anderen Betriebsparameter bereits vorgenommen sind. Im Schritt S33 werden mit der aktuellen Einstellung wiederum eine dem ausgewählten Referenzlayout 11a entsprechende Testmarkierung auf der Karte 9 erzeugt, dann im Schritt S34 die Kartenhalterung 7a mit der Karte 9 in die Soll-Inspektionslage IL_{S} verbracht, und im Schritt S35 die Karte 9 im Hinblick auf gegebenenfalls vorhandene Größenabweichungen der Testmarkierung von einer durch das Referenzlayout 11a definierten Soll-Größe vermessen. In der nachfolgenden Schrittfolge S36 bis S39 werden wiederum ein zweiter Durchlauf für die zweite Seite der Karte 9 sowie ein weiterer Durchlauf mit einer fünften Karte 9, wieder bevorzugt eine Blankokarte, für eine zweite Stufe ausgelöst, bevor im Schritt S40 eine optimierte Soll-Einstellung für den Fokusabstand, bei der die Größenabweichungen minimiert oder gar vollständig verschwinden, aus den zuvor in den jeweiligen Schritten S35 gewonnenen Inspektionsergebnissen ermittelt und vorgenommen wird und der Stufenzähler j erneut initialisiert wird.

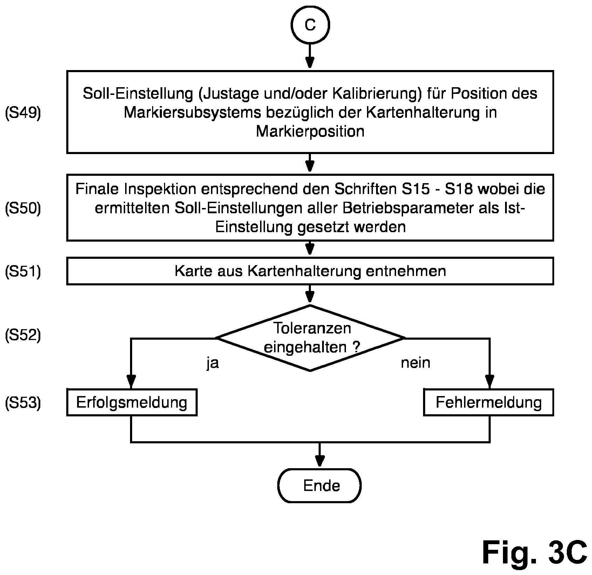

Es folgt ein weiterer mehrstufiger, die Schritte S41 bis S49 aufweisender, Teilprozess zur Ermittlung und Vornahme einer optimierten Soll-Einstellung (insbesondere Feinjustierung) des Markiersubsystems 3 bezüglich der Lage der erzeugten Markierungen in der X/Y-Ebene. Dazu wird zunächst im Schritt S41 wiederum anstelle der bisherigen Karte 9 eine sechste Karte 9, wieder bevorzugt eine Blankokarte, an der Kartenhaltung 7a angeordnet und die Kartenhalterung 7a in eine durch die bisher ermittelten Soll-Einstellungen der anderen Betriebsparameter, insbesondere auch für den Fokusabstand, definierte Markierlage ML gebracht. Im Schritt S42 werden mit der aktuellen Einstellung wiederum eine dem ausgewählten Referenzlayout 11a entsprechende Testmarkierung auf der Karte 9 erzeugt, dann im Schritt S43 die Kartenhalterung 7a mit der Karte 9 in die Soll-Inspektionslage IL_{S} verbracht, und im Schritt S44 die Karte 9 im Hinblick auf gegebenenfalls vorhandene Positionsabweichungen der Testmarkierung (in der X/Y-Ebene ) von einer durch das Referenzlayout 11a, insbesondere ihr zentrales "Fadenkreuz", definierten SollPosition vermessen. In der nachfolgenden Schrittfolge S45 bis S48, werden wiederum ein zweiter Durchlauf für die zweite Seite der Karte 9 sowie ein weiterer Durchlauf mit einer siebten Karte 9, wieder bevorzugt eine Blankokarte, für eine zweite Stufe ausgelöst, bevor in dem in **Fig. 3C** (die über den Verbinder C mit Fig. 3B verknüpft ist) dargestellten folgenden Schritt S49 eine optimierte Soll-Einstellung für die Position der Kartenhalterung 7a oder eine entsprechende Kalibrierung, bei der die Positionsabweichungen minimiert oder gar vollständig verschwinden, aus den zuvor in den jeweiligen Schritten S44 gewonnenen Inspektionsergebnissen ermittelt wird (insbesondere wieder durch Interpolation, Extrapolation oder Regression).

Es folgt ein im Schritt S50 zusammengefasste weiterer Teilprozess, der analog den Schritten S15 bis S18 verlaufen kann, wobei mit einer achten Karte 9, wieder bevorzugt eine Blankokarte, anstelle der bisherigen Karte 9 eine finale Inspektion der getroffenen Einstellungen erfolgt, wozu zunächst das Kartenmarkiersystem 1 unter Anwendung aller zuvor ermittelten Soll-Einstellungen konfiguriert wird, bevor die finale Inspektion erfolgt. Wird auf Basis der finalen Inspektion festgestellt, dass sämtliche vorgeschriebenen Toleranzen eingehalten sind (S52 - ja) so wird im Schritt S53 eine entsprechend eine einen erfolgreichen Verfahrensdurchlauf anzeigende Meldung ausgegeben. Andernfalls (S 52 - nein) wird stattdessen eine Fehlermeldung ausgegeben.

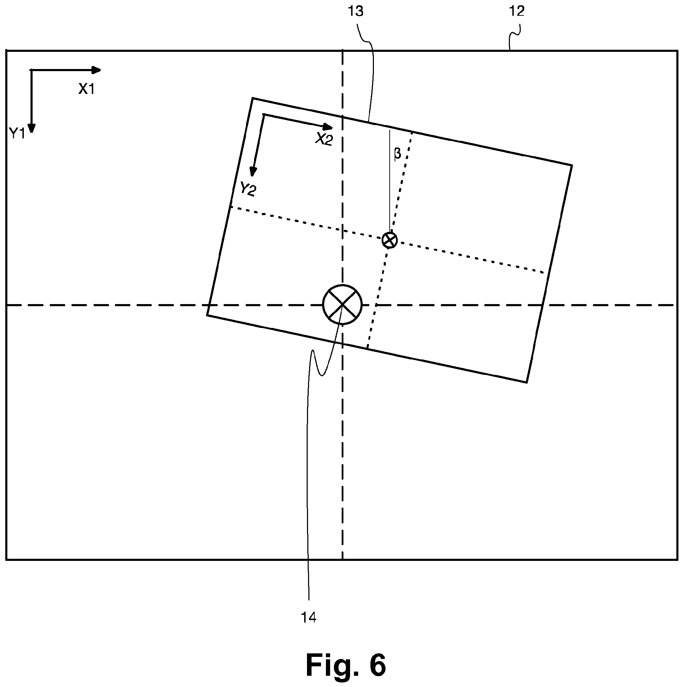

**Fig.6** zeigt eine Illustration zur Erläuterung eines automatischen Abgleichs der von dem Visionssubsystem und dem Markiersubsystem jeweils verwendeten Koordinatensysteme auf. Das Visionssubsystem verwendet ein erstes kartesisches Koordinatensystem 12 mit den Koordinaten X1 und Y1, wohingegen das Markiersubsystem ein zweites, davon unterschiedliches kartesisches Koordinatensystem 13 mit den Koordinaten X2 und Y2 verwendet Der Nullpunkt des Visionssubsystems stellt zugleich einen Rotationspunkt 14 für den Markierungslaser dar, um den dieser schwenkbar angeordnet ist.

Im in Fig. 6 dargestellten Fall sind die beiden Koordinatensysteme 12 und 13 jeweils zweidimensional, sodass eine dritte Richtungskomponente entfällt. Im allgemeinsten Fall sind die beiden Koordinatensysteme sowohl gegeneinander verschoben, sodass ihre Nullpunkte nicht zusammenfallen, als auch gegeneinander um einen Winkel β rotiert. Zudem können, - wie gezeigt - verschiedene Skalierungsfaktoren bzgl. der Achsen vorliegen.

Der Abgleich kann somit insbesondere einen oder mehrere, bevorzugt sämtliche der folgenden Aspekte der Koordinatensysteme betreffen: die beiden Nullpunkte, Skalierungsfaktoren, Achsenorientierungen, Neigungswinkel. So kann sichergestellt werden, dass Korrekturinformationen, etwa Positionskorrekturen oder Orientierungskorrekturen vom Visionssubsystem fehlerfrei an das Markiersubsystem übergeben und dort zur Vornahme einer entsprechend korrekten Markierung berücksichtigt werden können.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- 1: Kartenmarkiersystem
- 2: Visionssubsystem
- 3: Markiersubsystem
- 4: Bilderfassungsvorrichtung, insbesondere Kamera
- 4a: optische Achse der Bilderfassungsvorrichtung
- 5: Blendenvorrichtung ('Shuttervorrichtung)
- 6: Markiervorrichtung
- 6a: optische Achse der Markiervorrichtung
- 7: Karten lift
- 7a: Kartenhalterung
- 8: Steuervorrichtung
- 8a: Prozessorplattform
- 8b: Speicher
- 9: Karte
- 10: Referenzelement
- 10a-c: verschieden dimensionierte Referenzlayouts des Referenzelements
- 11a,b: Referenzmarkierungen in zwei verschiedenen Größen
- 12: Koordinatensystem des Visionssubsystems
- 13: Koordinatensystem des Markiersubsystems, entspricht Kartentlage
- 14: Rotationspunkt Laser

- IL: Inspektionslage, allgemein
- IL₀: Default-Inspektionslage
- IL_{S}: (optimierte) Soll-Inspektionslage

- ML: Markierlage, allgemein
- ML₀: Default- Markierlage
- ML_{S}: (optimierte) Soll- Markierlage

## Patentansprüche

1. Verfahren zum automatisierten Ermitteln einer optimierten Einstellung eines Kartenmarkiersystems (1), insbesondere eines Kartenmarkiersystems zur Personalisierung von Kunststoffkarten mittels Lasermarkierung, wobei das Kartenmarkiersystem (1) ein Markiersubsystem (3) zum Markieren einer Karte (9) sowie ein Visionssubsystem (2) zum Inspizieren der Karte (9) aufweist, und wobei das Verfahren umfasst:
(a) einen Visionssubsystemeinstellungsprozess zum automatisierten Ermitteln einer optimierten Soll-Einstellung des Visionssubsystems (2), aufweisend:
Inspizieren eines Referenzelements mittels des Visionssubsystems (2) unter Generierung eines Inspektionsergebnisses, wobei das Visionssubsystems (2) eine gegenwärtig eingestellte Ist-Einstellung aufweist; und
Ermitteln einer Soll-Einstellung des Visionssubsystems (2) in Abhängigkeit von einem Vergleich des Inspektionsergebnisses mit einem Referenzinspektionskriterium so, dass sie eine im Hinblick auf das Referenzinspektionskriterium relativ zur Ist-Einstellung optimierte Soll-Einstellung des Visionssubsystems (2) für einen nachfolgenden operativen Markierbetrieb des Kartenmarkiersystems (1) definiert;
(b) einen nachfolgenden Markiersubsystemeinstellungsprozess zum automatisierten Ermitteln einer optimierten Soll-Einstellung des Markiersubsystems (3), aufweisend:
Markieren einer Karte (9) mittels des Markiersubsystems (3) unter Ausbildung einer vorbestimmten Referenzmarkierung (11), wobei das Markiersubsystem (3) eine gegenwärtig eingestellte Ist-Einstellung aufweist;
Inspizieren der markierten Karte (9) mittels des gemäß seiner im Visionssubsystemeinstellungsprozess ermittelten Soll-Einstellung eingestellten Visionssubsystems (2) unter Generierung eines Karteninspektionsergebnisses; und
Ermitteln einer Soll-Einstellung des Markiersubsystems (3) in Abhängigkeit von einem Vergleich des Karteninspektionsergebnisses mit einem vorbestimmten Markierungsinspektionskriterium so, dass sie eine im Hinblick auf das zumindest eine Markierungsinspektionskriterium relativ zur Ist-Einstellung optimierte Soll-Einstellung des Markiersubsystems (3) für einen nachfolgenden operativen Markierbetrieb des Kartenmarkiersystems (1) definiert; und
(c) einen Abgleichprozess zum automatischen Abgleich der von dem Visionssubsystem und dem Markiersubsystem jeweils verwendeten Koordinatensysteme.

2. Verfahren nach Anspruch 1, wobei gemäß dem Visionssubsystemeinstellungsprozess für zumindest ein Betriebsparameter des Visionssubsystems (2), welcher eines oder mehrere der Folgenden zumindest anteilig festlegt, eine entsprechende Soll-Einstellung ermittelt wird:
- Eine räumliche Lage einer Kartenhalterung (7a) für eine zu inspizierende Karte (9) relativ zu einer Bilderfassungsvorrichtung (4) des Visionssubsystems (2);
- Eine optische Vergrößerung des Visionssubsystems (2);
- Ein optischer Fokus des Visionssubsystems (2);
- Die Lage einer optischen Achse des Visionssubsystems (2);
- Eine Einstellung einer zur Bestrahlung einer Karte (9) während ihrer Inspektion mittels des Visionssubsystems (2) vorgesehenen Strahlungsquelle des Visionssubsystems (2);
- Einer Verzerrungskalibrierung zur Kompensation von etwaigen bei der Inspektion einer Karte (9) durch das Visionssubsystem (2) auftretenden Bildverzerrungen;
- Einen Weißabgleich und/oder Schwarzabgleich des Visionssubsystems (2).

3. Verfahren nach Anspruch 2, wobei das automatisierte Festlegen einer optimierten Soll-Einstellung des zumindest einen Betriebsparameters des Visionssubsystems (2) ohne Berücksichtigung einer Verzerrungskalibrierung zur Kompensation von etwaigen bei der Inspektion einer Karte (9) durch das Visionssubsystem (2) auftretenden Bildverzerrungen erfolgt, wenn der Betriebsparameter eines oder mehrere der folgenden zumindest anteilig festlegt:
- Eine räumliche Lage einer Kartenhalterung (7a) für eine zu inspizierende Karte (9) relativ zu einer Bilderfassungsvorrichtung (4) des Visionssubsystems (2);
- Eine optische Vergrößerung des Visionssubsystems (2);
- Ein optischer Fokus des Visionssubsystems (2);
- Die Lage einer optischen Achse des Visionssubsystems (2).

4. Verfahren nach einem der vorausgehenden Ansprüche, wobei das Kartenmarkiersystem (1) eine parametrisiert verfahrbare und/oder orientierbare Kartenhalterung (7a) zur Aufnahme des Referenzelements oder einer zu markierenden Karte (9) aufweist und gemäß dem Visionssubsystemeinstellungsprozess für zumindest ein Betriebsparameter des Visionssubsystems (2), der eine durch Verfahren und/oder Orientieren der Kartenhalterung (7a) erreichbare Inspektionslage (IL) der Kartenhalterung (7a) relativ zu einer Bilderfassungsvorrichtung (4) des Visionssubsystems (2) zumindest anteilig festlegt, eine entsprechende Soll-Einstellung ermittelt wird.

5. Verfahren nach einem der Ansprüche 2 bis 4, wobei der Visionssubsystemeinstellungsprozess folgende Teilprozesse, insbesondere in der genannten Reihenfolge, aufweist:
- Bestimmen und Vornehmen einer optimierten Soll-Einstellung zumindest eines Betriebsparameters des Visionssubsystems (2), der zumindest anteilig eine räumliche Lage der Kartenhalterung (7a) relativ zum Visionssubsystems (2) festlegt;
- Bestimmen und Vornehmen einer optimierten Soll-Einstellung zumindest eines Betriebsparameters des Visionssubsystems (2), der zumindest anteilig einen optischen Fokus des Visionssubsystems (2) festlegt; und
- Bestimmen und Vornehmen einer optimierten Soll-Einstellung:
zumindest eines Betriebsparameters des Visionssubsystems (2), der zumindest anteilig eine Verzerrungskalibrierung zur Kompensation von etwaigen bei der Inspektion durch das Visionssubsystem (2) auftretenden Bildverzerrungen festlegt, und/oder
zumindest eines Betriebsparameters des Visionssubsystems (2), der zumindest anteilig einen Weißabgleich und/oder Schwarzabgleich des Visionssubsystems (2) festlegt.

6. Verfahren nach Anspruch 5, wobei der Visionssubsystemeinstellungsprozess folgende Teilprozesse in der genannten Reihenfolge aufweist:
- Bestimmen einer optimierten Soll-Einstellung zumindest eines Betriebsparameters des Visionssubsystems (2), der zumindest anteilig eine räumliche Lage, insbesondere Orientierung, der Kartenhalterung (7a) relativ zum Visionssubsystem (2) festlegt;
- Bestimmen einer optimierten Soll-Einstellung zumindest eines Betriebsparameters des Visionssubsystems (2), der zumindest anteilig einen optischen Fokus des Visionssubsystems (2) festlegt; und
- erneutes Bestimmen einer optimierten Soll-Einstellung des zumindest eines Betriebsparameters des Visionssubsystems (2), der zumindest anteilig eine räumliche Orientierung der Kartenhalterung (7a) relativ zum Visionssubsystem (2) festlegt.

7. Verfahren nach einem der vorausgehenden Ansprüche, wobei der Visionssubsystemeinstellungsprozess mehrstufig erfolgt, wobei:
in jeder der Stufen der zumindest eine Betriebsparameter auf eine verschiedene Ist-Einstellung gesetzt und bei dieser Ist-Einstellung eine Inspektion des Referenzelements vorgenommen wird; und
die Soll-Einstellung des Visionssubsystems (2) in Abhängigkeit vom Vergleich der in den jeweiligen Stufen ermittelten Inspektionsergebnisse anhand des zumindest einen vorbestimmten Inspektionskriteriums festgelegt wird.

8. Verfahren nach einem der vorausgehenden Ansprüche, wobei der Visionssubsystemeinstellungsprozess des Weiteren aufweist:
Überprüfen des Referenzelements mittels des Visionssubsystems (2), anhand von Referenzinformation dahingehend, ob es sich bei dem Referenzelement (10) um ein gemäß der Referenzinformation korrektes oder fehlerfreies Referenzelement (10) handelt; und
Auslösen einer vorbestimmten Fehlerbehandlungsmaßnahme, wenn dies gemäß dem Ergebnis der Prüfung nicht der Fall ist.

9. Verfahren nach einem der vorausgehenden Ansprüche, wobei gemäß dem Markiersubsystemeinstellungsprozess für zumindest ein Betriebsparameter des Markiersubsystems (3), welcher eines oder mehrere der folgenden zumindest anteilig festlegt, eine entsprechende Soll-Einstellung ermittelt wird:
- Eine räumliche Lage einer Kartenhalterung (7a) für eine zu markierende Karte (9) relativ zu einer Markiervorrichtung (6) des Markiersubsystems (3)
- Eine optische Vergrößerung des Markiersubsystems (3)
- Ein optischer Fokusabstand des Markiersubsystems (3);
- Die Lage einer optischen Achse des Markiersubsystems (3);
- Eine Lagekalibrierung zur Kompensation von etwaigen Fehljustierungen des Markiersubsystems (3).

10. Verfahren nach einem der vorausgehenden Ansprüche, wobei das Kartenmarkiersystem (1) eine parametrisiert verfahrbare und/oder orientierbare Kartenhalterung (7a) aufweist und gemäß dem Markiersubsystemeinstellungsprozess für zumindest ein Betriebsparameter des Markiersubsystems (3), der eine durch Verfahren und/oder Orientieren der Kartenhalterung (7a) erreichbare Markierlage (ML) der Kartenhalterung (7a) relativ zu einer Markiervorrichtung (6) des Markiersubsystems (3) zumindest anteilig festlegt, eine entsprechende Soll-Einstellung ermittelt wird.

11. Verfahren nach Anspruch 9 oder 10, wobei der Markiersubsystemeinstellungsprozess folgende Teilprozesse in der genannten Reihenfolge aufweist:
- Bestimmen und Vornehmen einer optimierten Soll-Einstellung zumindest eines Betriebsparameters des Visionssubsystems (2), der zumindest anteilig eine räumliche Lage der Kartenhalterung (7a) relativ zu einer Markiervorrichtung (6) des Markiersubsystems (3) oder eine entsprechende Lagekalibrierung oder eine Kombination aus beiden festlegt;
- Bestimmen und Vornehmen einer optimierten Soll-Einstellung zumindest eines Betriebsparameters des Markiersubsystems (3), der zumindest anteilig einen Fokusabstand des Markiersubsystems (3) festlegt; und
- erneutes Bestimmen und Vornehmen einer optimierten Soll-Einstellung des zumindest eines Betriebsparameters des Visionssubsystems (2), der zumindest anteilig eine räumliche Orientierung der Kartenhalterung (7a) relativ zu dem Markiersubsystem (3) oder eine entsprechende Lagekalibrierung oder eine Kombination aus beiden festlegt.

12. Verfahren nach einem der vorausgehenden Ansprüche, wobei der Markiersubsystemeinstellungsprozess mehrstufig erfolgt, wobei:
In jeder der Stufen:
- der zumindest eine Betriebsparameter auf eine verschiedene Ist-Einstellung gesetzt wird,
- eine Karte (9) bei dieser Ist-Einstellung mittels des Markiersubsystems (3) unter Ausbildung einer vorbestimmten Referenzmarkierung (11) markiert wird, und
- die markierte Karte (9) mittels des gemäß seiner im Visionssubsystemeinstellungsprozess ermittelten Soll-Einstellung eingestellten Visionssubsystems (2) inspiziert wird; und
die Soll-Einstellung des Visionssubsystems (2) in Abhängigkeit vom Vergleich der in den jeweiligen Stufen ermittelten Inspektionsergebnisse anhand des zumindest einen vorbestimmten Markierungsinspektionskriterium festgelegt wird.

13. Verfahren nach einem der vorausgehenden Ansprüche 9 bis 12, wobei gemäß dem Markiersubsystemeinstellungsprozess für zumindest einen Betriebsparameter des Markiersubsystems (3), welcher einen optischen Fokusabstand des Markiersubsystems (3) zumindest anteilig festlegt, eine entsprechende Soll-Einstellung im Hinblick darauf ermittelt wird, dass mit dieser Soll-Einstellung eine Minimierung einer Abweichung einer vorbestimmten geometrischen Eigenschaft der Referenzmarkierung (11) gegenüber einer durch das Markierungsinspektionskriterium gekennzeichnete Referenzgröße erreicht wird.

14. Verfahren nach einem der vorausgehenden Ansprüche, wobei der Visionssubsystemeinstellungsprozess, der Markiersubsystemeinstellungsprozess oder beide sowohl in Bezug auf eine Vorderseite als auch in Bezug auf eine Rückseite des Referenzelements bzw. der zu markierenden Karte (9) erfolgt bzw. erfolgen.

15. Verfahren nach Anspruch 14, wobei das Referenzelement (10) bzw. die Karte (9) durch das Kartenmarkiersystem (1) zwischen der Inspektion seiner Vorderseite und der Inspektion seiner Rückseite im Rahmen des automatisierten Festlegens einer optimierten Einstellung des zumindest eines Betriebsparameters gedreht wird, um nach der Vorderseite auch die Rückseite der Inspektion durch dasselbe Visionssubsystem (2) zugänglich zu machen, oder umgekehrt.

16. Verfahren nach einem der vorausgehenden Ansprüche, wobei die mittels des Verfahrens bestimmten Soll-Einstellungen von Betriebsparametern des Visionssubsystems (2) und/oder des Markiersubsystems (3), zumindest anteilig, zur Wiederverwendung für eine spätere erneute Einstellung des Kartenmarkiersystems oder als Konfigurationsdaten zur entsprechenden datenbasierten Konfigurierung eines weiteren Kartenmarkiersystems gespeichert oder ausgegeben werden.

17. Kartenmarkiersystem (1), insbesondere zur Personalisierung von Kunststoffkarten mittels Lasermarkierung, wobei das Kartenmarkiersystem (1) ein Markiersubsystem (3) zum Markieren einer Karte (9) sowie ein Visionssubsystem (2) zum Inspizieren der Karte (9) aufweist und eingerichtet ist, das Verfahren gemäß einem der vorausgehenden Ansprüche auszuführen.

18. Computerprogramm, das konfiguriert ist, ein Kartenmarkiersystem (1) gemäß Anspruch 17 zu veranlassen, das Verfahren gemäß einem der Ansprüche 1 bis 16 auszuführen.

## Claims

1. A method for automatically determining an optimized setting of a card marking system (1), in particular a card marking system for the personalization of plastic cards by means of laser marking, wherein the card marking system (1) comprises a marking subsystem (3) for marking a card (9), as well as a vision subsystem (2) for inspecting the card (9), and wherein the method comprises:
(a) a vision subsystem setting process for automatically determining an optimized target setting of the vision subsystem (2), comprising:
inspecting a reference element by means of the vision subsystem (2) and generating an inspection result, wherein the vision subsystem (2) has a currently set actual setting; and
determining a target setting of the vision subsystem (2) in dependence upon a comparison of the inspection result with a reference inspection criterion in such a way that the target setting defines a target setting of the vision subsystem (2) for a subsequent operative marking mode of operation of the card marking system (1), which target setting of the vision subsystem (2), with respect to the reference inspection criterion, is optimized relative to the actual setting;
(b) a subsequent marking subsystem setting process for automatically determining an optimized target setting of the marking subsystem (3), comprising:
marking a card (9) by means of the marking subsystem (3) so as to form a predetermined reference marking (11), wherein the marking subsystem (3) is currently set to an actual setting;
inspecting the marked card (9) by means of the vision subsystem (2) set according to its target setting which has been determined in the vision subsystem setting process so as to generate a card inspection result; and
determining a target setting of the marking subsystem (3) in dependence upon a comparison of the card inspection result with a predetermined marking inspection criterion so that the target setting of the marking subsystem (3) defines a target setting of the marking subsystem (3) which, relative to the actual setting, is optimized with respect to the at least one marking inspection criterion, for a subsequent operative marking mode of operation of the card marking system (1); and
(c) a reconciliation process in order to automatically reconcile the coordinate systems which are used respectively by the vision subsystem and the marking subsystem.

2. The method according to claim 1, wherein, for at least one operating parameter of the vision subsystem (2), which at least one operating parameter at least partly determines one or more of the following, a corresponding target setting is determined according to the vision subsystem setting process:
- a spatial pose of a card holder (7a) for a card (9) to be inspected, relative to an image acquisition device (4) of the vision subsystem (2);
- an optical magnification of the vision subsystem (2);
- an optical focus of the vision subsystem (2);
- the pose of an optical axis of the vision subsystem (2);
- a setting of a source of radiation of the vision subsystem (2) provided for irradiating a card (9) during its inspection by means of the vision subsystem (2);
- a distortion calibration for compensating any image distortions which may occur during the inspection of a card (9) by the vision subsystem (2);
- a white balance and / or black balance of the vision subsystem (2).

3. The method according to claim 2, wherein the automated determination of an optimized target setting of the at least one operating parameter of the vision subsystem (2) is carried out without taking into account a distortion calibration to compensate for any image distortion which may occur during the inspection of a card (9) by the vision subsystem (2), if the operating parameter at least partly determines one or more of the following:
- a spatial pose of a card holder (7a) for a card (9) to be inspected, relative to an image acquisition device (4) of the vision subsystem (2);
- an optical magnification of the vision subsystem (2);
- an optical focus of the vision subsystem (2);
- the pose of an optical axis of the vision subsystem (2).

4. The method according to any one of the preceding claims, wherein the card marking system (1) comprises a card holder (7a) for receiving the reference element or a card (9) to be marked, which card holder (7a) can be moved and / or oriented in a parameterized manner, and, according to the vision subsystem setting process, for at least one operating parameter of the vision subsystem (2), which at least one operating parameter at least partly determines an inspection pose (IL) of the card holder (7a) relative to an image acquisition device (4) of the vision subsystem (2), which inspection pose (IL) can be attained by moving and / or orienting the card holder (7a), a corresponding target setting is determined.

5. The method according to any one of the claims 2 to 4, wherein the vision subsystem setting process comprises the following partial processes, in particular in the order stated:
- determining and putting into effect an optimized target setting of at least one operating parameter of the vision subsystem (2), which at least one operating parameter at least partly determines a spatial pose of the card holder (7a) relative to the vision subsystem (2);
- determining and putting into effect an optimized target setting of at least one operating parameter of the vision subsystem (2), which at least one operating parameter at least partly determines an optical focus of the vision subsystem (2); and
- determining and putting into effect an optimized target setting:
of at least one operating parameter of the vision subsystem (2) which at least one operating parameter at least partly determines a distortion calibration for the compensation of any image distortions which may occur during the inspection by the vision subsystem (2), and / or
of at least one operating parameter of the vision subsystem (2), which at least one operating parameter at least partly determines a white balance and / or black balance of the vision subsystem (2).

6. The method according to claim 5, wherein the vision subsystem setting process comprises the following partial processes in the order stated:
- determining an optimized target setting of at least one operating parameter of the vision subsystem (2), which at least one operating parameter at least partly determines a spatial pose, in particular a spatial orientation, of the card holder (7a) relative to the vision subsystem (2);
- determining an optimized target setting of at least one operating parameter of the vision subsystem (2), which at least one operating parameter at least partly determines an optical focus of the vision subsystem (2); and
- again determining an optimized target setting of the at least one operating parameter of the vision subsystem (2), which at least one operating parameter at least partly determines a spatial orientation of the card holder (7a) relative to the vision subsystem (2).

7. The method according to any one of the preceding claims, wherein the vision subsystem setting process takes place in several stages, wherein:
in each of the stages, the at least one operating parameter is set to a different actual setting and an inspection of the reference element is carried out at this actual setting; and
the target setting of the vision subsystem (2) is determined in dependence upon the comparison of the inspection results which are obtained in the respective stages on the basis of the at least one predetermined inspection criterion.

8. The method according to any one of the preceding claims, wherein the vision subsystem setting process further comprises:
checking the reference element by means of the vision subsystem (2), on the basis of reference information, as to whether the reference element (10) is a correct or error-free reference element (10) according to the reference information; and
triggering a predetermined error handling action if this is not the case according to the result of the check.

9. The method according to any one of the preceding claims, wherein, for at least one operating parameter of the marking subsystem (3), which at least one operating parameter at least partly determines one or more of the following, a corresponding target setting is determined according to the marking subsystem setting process:
- a spatial pose of a card holder (7a) for a card (9) to be marked, relative to a marking device (6) of the marking subsystem (3);
- an optical magnification of the marking subsystem (3);
- an optical focus distance of the marking subsystem (3);
- the pose of an optical axis of the marking subsystem (3);
- a pose calibration to compensate for any possible incorrect adjustment of the marking subsystem (3).

10. The method according to any one of the preceding claims, wherein the card marking system (1) comprises a card holder (7a) which can be moved and / or oriented in a parameterized manner, and, according to the marking subsystem setting process, for at least one operating parameter of the marking subsystem (3), which at least one operating parameter at least partly determines a marking pose (ML) of the card holder (7a) relative to a marking device (6) of the marking subsystem (3), which marking pose can be attained by moving and / or orienting the card holder (7a), a corresponding target setting is determined.

11. The method according to claim 9 or 10, wherein the marking subsystem setting process comprises the following partial processes in the order stated:
- determining and putting into effect an optimized target setting of at least one operating parameter of the vision subsystem (2), which at least one operating parameter at least partly determines a spatial pose of the card holder (7a) relative to a marking device (6) of the marking subsystem (3) or a corresponding pose calibration or a combination of both;
- determining and putting into effect an optimized target setting of at least one operating parameter of the marking subsystem (3), which at least one operating parameter at least partly determines a focus distance of the marking subsystem (3); and
- again determining and putting into effect an optimized target setting of the at least one operating parameter of the vision subsystem (2), which at least one operating parameter at least partly determines a spatial orientation of the card holder (7a) relative to the marking subsystem (3), or a corresponding pose calibration or a combination of both.

12. The method according to any one of the preceding claims, wherein the marking subsystem setting process takes place in several stages, wherein:
in each of the stages:
- the at least one operating parameter is set to a different actual setting,
- a card (9) is marked at this actual setting by means of the marking subsystem (3) so as to form a predetermined reference marking (11), and
- the marked card (9) is inspected by means of the vision subsystem (2), which has been set according to its target setting which has been determined in the vision subsystem setting process; and
the target setting of the vision subsystem (2) is determined in dependence upon the comparison of the inspection results which are obtained in the respective stages on the basis of the at least one predetermined marking inspection criterion.

13. The method according to any one of the preceding claims 9 to 12, wherein, for at least one operating parameter of the marking subsystem (3), which at least one operating parameter at least partly determines an optical focus distance of the marking subsystem (3), a corresponding target setting is determined, according to the marking subsystem setting process, with a view to being able to achieve, with this target setting, a minimization of a deviation of a predetermined geometric property of the reference marking (11) from a reference quantity **characterized by** the marking inspection criterion.

14. The method according to any one of the preceding claims, wherein the vision subsystem setting process, the marking subsystem setting process, or both, is or are carried out both in relation to a front face and in relation to a rear face of the reference element or, respectively, of the card (9) to be marked.

15. The method according to claim 14, wherein the reference element (10) or the card (9) is rotated by the card marking system (1) between the inspection of its front face and the inspection of its rear face, within the framework of the automated determination of an optimized setting of the at least one operating parameter, in order to make the rear face accessible as well, for inspection by the same vision subsystem (2), after the front face, or vice versa.

16. The method according to any one of the preceding claims, wherein the target settings of operating parameters of the vision subsystem (2) and / or of the marking subsystem (3) which have been determined by means of the method are stored or output, at least partly, for reuse for a later readjustment of the card marking system or as configuration data for a corresponding data-based configuring of a further card marking system.

17. A card marking system (1), in particular for the personalization of plastic cards by means of laser marking, wherein the card marking system (1) comprises a marking subsystem (3) for marking a card (9), as well as a vision subsystem (2) for inspecting the card (9), and wherein the card marking system (1) is arranged to carry out the method according to any one of the preceding claims.

18. A computer program which is configured to cause the card marking system (1) according to claim 17 to carry out the method according to any one of the claims 1 to 16.

## Revendications

1. Procédé de détermination automatique d'un ajustement optimisé d'un système de marquage de cartes (1), en particulier d'un système de marquage de cartes pour la personnalisation de cartes en plastique par marquage laser, dans lequel le système de marquage de cartes (1) présente un sous-système de marquage (3) pour le marquage d'une carte (9) ainsi qu'un sous-système de vision (2) pour l'inspection de la carte (9), et dans lequel le procédé comprend :
(a) un processus d'ajustement de sous-système de vision pour la détermination automatique d'un ajustement de consigne optimisé du sous-système de vision (2), présentant :
l'inspection d'un élément de référence au moyen du sous-système de vision (2) par génération d'un résultat d'inspection, dans lequel le sous-système de vision (2) présente un ajustement réel actuellement ajusté ; et
la détermination d'un ajustement de consigne du sous-système de vision (2) en fonction d'une comparaison du résultat d'inspection avec un critère d'inspection de référence de sorte qu'il définit un ajustement de consigne optimisé du sous-système de vision (2) au regard du critère d'inspection de référence par rapport à l'ajustement réel pour un mode de marquage opérationnel subséquent du système de marquage de cartes (1) ;
(b) un processus d'ajustement de sous-système de marquage subséquent pour la détermination automatique d'un ajustement de consigne optimisé du sous-système de marquage (3), présentant :
le marquage d'une carte (9) au moyen du sous-système de marquage (3) par réalisation d'un marquage de référence prédéterminé (11), dans lequel le sous-système de marquage (3) présente un ajustement réel actuellement ajusté ;
l'inspection de la carte (9) marquée au moyen du sous-système de vision (2) ajusté selon son ajustement de consigne déterminé dans le processus d'ajustement de sous-système de vision par génération d'un résultat d'inspection de carte ; et
la détermination d'un ajustement de consigne du sous-système de marquage (3) en fonction d'une comparaison du résultat d'inspection de carte avec un critère d'inspection de marquage prédéterminé de sorte qu'il définit un ajustement de consigne optimisé du sous-système de marquage (3) au regard de l'au moins un critère d'inspection de marquage par rapport à l'ajustement réel pour un mode de marquage opérationnel subséquent du système de marquage de cartes (1) ; et
(c) un processus de rapprochement pour le rapprochement automatique des systèmes de coordonnées utilisés respectivement par le sous-système de vision et le sous-système de marquage.

2. Procédé selon la revendication 1, dans lequel un ajustement de consigne correspondant est déterminé selon le processus d'ajustement de sous-système de vision pour au moins un paramètre de fonctionnement du sous-système de vision (2), lequel fixe au moins proportionnellement un ou plusieurs des éléments suivants :
- une position spatiale d'une fixation de carte (7a) pour une carte (9) à inspecter par rapport à un dispositif de capture d'image (4) du sous-système de vision (2) ;
- un grossissement optique du sous-système de vision (2) ;
- une focale optique du sous-système de vision (2) ;
- la position d'un axe optique du sous-système de vision (2) ;
- un ajustement d'une source de rayonnement du sous-système de vision (2) prévue pour l'irradiation d'une carte (9) pendant son inspection au moyen du sous-système de vision (2) ;
- un étalonnage de déformation pour la compensation de déformations d'images éventuelles survenant lors de l'inspection d'une carte (9) par le sous-système de vision (2) ;
- une balance des blancs et/ou une balance des noirs du sous-système de vision (2).

3. Procédé selon la revendication 2, dans lequel la fixation automatique d'un ajustement de consigne optimisé de l'au moins un paramètre de fonctionnement du sous-système de vision (2) se fait sans qu'il soit tenu compte d'un étalonnage de déformation pour la compensation de déformations d'images éventuelles survenant lors de l'inspection d'une carte (9) par le sous-système de vision (2), lorsque le paramètre de fonctionnement d'un ou de plusieurs des éléments suivants fixe au moins proportionnellement :
- une position spatiale d'une fixation de carte (7a) pour une carte (9) à inspecter par rapport à un dispositif de capture d'image (4) du sous-système de vision (2) ;
- un grossissement optique du sous-système de vision (2) ;
- une focale optique du sous-système de vision (2) ;
- la position d'un axe optique du sous-système de vision (2).

4. Procédé selon l'une quelconque des revendications précédentes, dans lequel le système de marquage de cartes (1) présente une fixation de carte (7a) orientable et/ou déplaçable de manière paramétrée pour la réception de l'élément de référence ou d'une carte (9) à marquer et un ajustement de consigne correspondant est déterminé selon le processus d'ajustement de sous-système de vision pour au moins un paramètre de fonctionnement du sous-système de vision (2), qui fixe au moins proportionnellement une position d'inspection (IL) de la fixation de carte (7a) pouvant être atteinte par déplacement et/ou orientation de la fixation de carte (7a) par rapport à un dispositif de capture d'image (4) du sous-système de vision (2).

5. Procédé selon l'une quelconque des revendications 2 à 4, dans lequel le processus d'ajustement de sous-système de vision présente les processus partiels suivants, en particulier dans l'ordre indiqué :
- détermination et procédure d'un ajustement de consigne optimisé d'au moins un paramètre de fonctionnement du sous-système de vision (2), qui fixe au moins proportionnellement une position spatiale de la fixation de carte (7a) par rapport au sous-système de vision (2) ;
- détermination et procédure d'un ajustement de consigne optimisé d'au moins un paramètre de fonctionnement du sous-système de vision (2), qui fixe au moins proportionnellement une focale optique du sous-système de vision (2) ; et
- détermination et procédure d'un ajustement de consigne optimisé :
d'au moins un paramètre de fonctionnement du sous-système de vision (2), qui fixe au moins proportionnellement un étalonnage de déformation pour la compensation de déformations d'images éventuelles survenant lors de l'inspection par le sous-système de vision (2), et/ou
d'au moins un paramètre de fonctionnement du sous-système de vision (2), qui fixe au moins proportionnellement une balance des blancs et/ou une balance des noirs du sous-système de vision (2).

6. Procédé selon la revendication 5, dans lequel le processus d'ajustement de sous-système de vision présente les processus partiels suivants dans l'ordre indiqué :
- détermination d'un ajustement de consigne optimisé d'au moins un paramètre de fonctionnement du sous-système de vision (2), qui fixe au moins proportionnellement une position spatiale, en particulier une orientation, de la fixation de carte (7a) par rapport au sous-système de vision (2) ;
- détermination d'un ajustement de consigne optimisé d'au moins un paramètre de fonctionnement du sous-système de vision (2), qui fixe au moins proportionnellement une focale optique du sous-système de vision (2) ; et
- nouvelle détermination d'un ajustement de consigne optimisé de l'au moins un paramètre de fonctionnement du sous-système de vision (2), qui fixe au moins proportionnellement une orientation spatiale de la fixation de carte (7a) par rapport au sous-système de vision (2).

7. Procédé selon l'une quelconque des revendications précédentes, dans lequel le processus d'ajustement de sous-système de vision se fait à plusieurs niveaux, dans lequel :
dans chacun des niveaux, l'au moins un paramètre de fonctionnement est réglé sur un ajustement réel différent et il est procédé à une inspection de l'élément de référence à cet ajustement réel ; et
l'ajustement de consigne du sous-système de vision (2) est fixé en fonction de la comparaison des résultats d'inspection déterminés dans les niveaux respectifs à l'aide de l'au moins un critère d'inspection prédéterminé.

8. Procédé selon l'une quelconque des revendications précédentes, dans lequel le processus d'ajustement de sous-système de vision présente en outre :
le contrôle de l'élément de référence au moyen du sous-système de vision (2), à l'aide d'information de référence pour savoir si l'élément de référence (10) est un élément de référence (10) correct ou sans défaut selon l'information de référence ; et
le déclenchement d'une mesure de traitement de défaut prédéterminée, lorsque ceci n'est pas le cas selon le résultat du contrôle.

9. Procédé selon l'une quelconque des revendications précédentes, dans lequel un ajustement de consigne correspondant est déterminé selon le processus d'ajustement de sous-système de marquage pour au moins un paramètre de fonctionnement du sous-système de marquage (3), lequel fixe au moins proportionnellement un ou plusieurs des éléments suivants :
- une position spatiale d'une fixation de carte (7a) pour une carte (9) à marquer par rapport à un dispositif de marquage (6) du sous-système de marquage (3) ;
- un grossissement optique du sous-système de marquage (3) ;
- une distance focale optique du sous-système de marquage (3) ;
- la position d'un axe optique du sous-système de marquage (3) ;
- un étalonnage de position pour la compensation d'erreurs d'ajustement éventuelles du sous-système de marquage (3).

10. Procédé selon l'une quelconque des revendications précédentes, dans lequel le système de marquage de cartes (1) présente une fixation de carte (7a) orientable et/ou déplaçable de manière paramétrée et un ajustement de consigne correspondant est déterminé selon le processus d'ajustement de sous-système de marquage pour au moins un paramètre de fonctionnement du sous-système de marquage (3), qui fixe au moins proportionnellement une position de marquage (ML) de la fixation de carte (7a) pouvant être atteinte par déplacement et/ou orientation de la fixation de carte (7a) par rapport à un dispositif de marquage (6) du sous-système de marquage (3).

11. Procédé selon la revendication 9 ou 10, dans lequel le processus d'ajustement de sous-système de marquage présente les processus partiels suivants dans l'ordre indiqué :
- détermination et procédure d'un ajustement de consigne optimisé d'au moins un paramètre de fonctionnement du sous-système de vision (2), qui fixe au moins proportionnellement une position spatiale de la fixation de carte (7a) par rapport à un dispositif de marquage (6) du sous-système de marquage (3) ou un étalonnage de position correspondant ou une combinaison des deux,
- détermination et procédure d'un ajustement de consigne optimisé d'au moins un paramètre de fonctionnement du sous-système de marquage (3), qui fixe au moins proportionnellement une distance focale du sous-système de marquage (3) ; et
- nouvelle détermination et procédure d'un ajustement de consigne optimisé de l'au moins un paramètre de fonctionnement du sous-système de vision (2), qui fixe au moins proportionnellement une orientation spatiale de la fixation de carte (7a) par rapport au sous-système de marquage (3) ou un étalonnage de position correspondant ou une combinaison des deux.

12. Procédé selon l'une quelconque des revendications précédentes, dans lequel le processus d'ajustement de sous-système de marquage se fait à plusieurs niveaux, dans lequel :
dans chacun des niveaux :
- l'au moins un paramètre de fonctionnement est réglé sur un ajustement réel différent,
- une carte (9) est marquée à cet ajustement réel au moyen du sous-système de marquage (3) en formant un marquage de référence prédéterminé (11), et
- la carte (9) marquée est inspectée au moyen du sous-système de vision (2) réglé selon son ajustement de consigne déterminé dans le processus d'ajustement de sous-système de vision ; et
l'ajustement de consigne du sous-système de vision (2) est fixé en fonction de la comparaison des résultats d'inspection déterminés dans les niveaux respectifs à l'aide de l'au moins un critère d'inspection de marquage prédéterminé.

13. Procédé selon l'une quelconque des revendications précédentes 9 à 12, dans lequel un ajustement de consigne correspondant est déterminé selon le processus d'ajustement de sous-système de marquage pour au moins un paramètre de fonctionnement du sous-système de marquage (3), lequel fixe au moins proportionnellement une distance focale optique du sous-système de marquage (3), au regard du fait qu'une minimisation d'une divergence d'une propriété géométrique prédéterminée du marquage de référence (11) par rapport à une grandeur de référence **caractérisée par** le critère d'inspection de marquage est obtenue avec cet ajustement de consigne.

14. Procédé selon l'une quelconque des revendications précédentes, dans lequel le processus d'ajustement de sous-système de vision, le processus d'ajustement de sous-système de marquage ou les deux se fait ou se font aussi bien en rapport avec une face avant qu'en rapport avec une face arrière de l'élément de référence ou de la carte (9) à marquer.

15. Procédé selon la revendication 14, dans lequel l'élément de référence (10) ou la carte (9) est tourné par le système de marquage de cartes (1) entre l'inspection de sa face avant et l'inspection de sa face arrière dans le cadre de la fixation automatique d'un ajustement optimisé de l'au moins un paramètre de fonctionnement pour rendre après la face avant aussi la face arrière accessible à l'inspection par le même sous-système de vision (2), ou inversement.

16. Procédé selon l'une quelconque des revendications précédentes, dans lequel les ajustements de consigne déterminés au moyen du procédé de paramètres de fonctionnement du sous-système de vision (2) et/ou du sous-système de marquage (3) sont enregistrés ou édités, au moins proportionnellement, pour la réutilisation pour un nouvel ajustement ultérieur du système de marquage de cartes ou comme données de configuration pour la configuration correspondante basée sur les données d'un autre système de marquage de cartes.

17. Système de marquage de cartes (1), en particulier pour la personnalisation de cartes en plastique par marquage laser, dans lequel le système de marquage de cartes (1) présente un sous-système de marquage (3) pour le marquage d'une carte (9) ainsi qu'un sous-système de vision (2) pour l'inspection de la carte (9) et est aménagé pour réaliser le procédé selon l'une quelconque des revendications précédentes.

18. Programme informatique, qui est configuré pour amener un système de marquage de cartes (1) selon la revendication 17 à exécuter le procédé selon l'une quelconque des revendications 1 à 16.
